# EUROPEAN PATENT APPLICATION

(11) **EP 4 106 292 A1**
(43) Date of publication of application: **21.12.2022**
(21) Application number: 21765524.0
(22) Date of filing: 04.03.2021
(51) Int. Cl.: H04L 29/08, G06F 16/955

(54) **AUTO-THERMAL EVAPORATIVE LIQUID-PHASE SYNTHESIS METHOD FOR CATHODE MATERIAL FOR BATTERY**

(30) Priority: 06.03.2020 CN 202010151568
(71) Applicant: Shenzhen Dynanonic Co., Ltd., Shenzhen, Guangdong 518055 (CN)
(72) Inventor: KONG, Lingyong, Shenzhen, Guangdong 518052 (CN); JI, Xuewen, Shenzhen, Guangdong 518052 (CN); WANG, Yunshi, Shenzhen, Guangdong 518052 (CN)
(74) Representative: Gill Jennings & Every LLP
(86) International application number: PCT/CN2021/078976
(87) International publication number: WO 2021/175273

(57) **Abstract**

Embodiments of this application disclose a manufacturer usage description MUD file obtaining method and a device. A MUD controller uses a verified valid MUD URL as a trusted basis. When a terminal device is currently updated, the MUD controller obtains a new MUD file based on a new MUD URL that meets a matching condition with the trusted MUD URL Alternatively, the MUD controller uses fixed attribute information of a valid MUD URL as a trusted basis. When a terminal device is currently updated, the MUD controller obtains an updated MUD URL based on the trusted fixed attribute information and newly received variable attribute information, and obtains a new MUD file. This is applicable to a scenario in which a terminal device is updated, so that it is possible for a MUD controller to flexibly, securely, and effectively obtain a MUD file corresponding to the updated terminal device.

## Description

This application claims priority to Chinese Patent Application No. 202010151568.9, filed with the China National Intellectual Property Administration on March 6, 2020 and entitled "MANUFACTURER USAGE DESCRIPTION MUD FILE OBTAINING METHOD AND DEVICE", which is incorporated herein by reference in its entirety.

### TECHNICAL FIELD

This application relates to the field of communication technologies, and in particular, to a manufacturer usage description (English: Manufacturer Usage Description, MUD for short) file obtaining method and a device.

### BACKGROUND

With continuous improvement of digitalization and intelligence, an increasing quantity of terminal devices emerge in a network scenario, for example, an increasing quantity of terminal devices (such as a printer, a camera, a smart LED lamp, and a conference room projection device) emerge in an internet of things (English: Internet of Things, IoT for short) scenario. To constrain various terminal devices, a manufacturer of a terminal device generates a MUD file that includes information such as a device type and network access permission of the terminal device, and when the terminal device accesses a network, a network device connected to the terminal device can use the MUD file to constrain the terminal device accordingly.

Currently, a manufacturer of a terminal device usually stores a MUD file on a MUD file server. Before the terminal device is delivered from a factory, the manufacturer writes, into a certificate of the terminal device, a MUD uniform resource locator (English: Uniform Resource Locator, URL for short) that corresponds to the MUD file on the MUD file server. In this way, when the terminal device accesses a network, a network device connected to the terminal device may securely obtain the corresponding MUD file by using the MUD URL carried in the certificate, so that the terminal device is effectively constrained.

In a scenario in which the terminal device is updated, or the like, both the MUD file and the corresponding MUD URL of the terminal device change. In this case, the MUD URL in the terminal device needs to be updated to a changed MUD URL accordingly. However, in the terminal device, content in the certificate cannot be changed, to be specific, the MUD URL carried in the certificate cannot be flexibly updated. Consequently, the network device cannot accurately obtain an updated MUD file, and cannot effectively constrain the current terminal device.

### SUMMARY

Based on this, embodiments of this application provide a manufacturer usage description MUD file obtaining method and a device. Even in a scenario, for example, updating a terminal device, a MUD controller corresponding to the terminal device can securely and effectively obtain a changed MUD URL, to obtain an updated MUD file, so that the terminal device is effectively constrained based on the new MUD file corresponding to the updated terminal device.

According to a first aspect, an embodiment of this application provides a MUD file obtaining method. The method is implemented by a MUD controller. For example, the method may include: verifying validity of a first MUD URL based on a certificate sent by a terminal device; after the first MUD URL is verified successfully, obtaining a first MUD file based on the first MUD URL; when the terminal device is updated, receiving a first message sent by the terminal device, where the first message carries a second MUD URL, the second MUD URL is used to obtain an updated second MUD file when the terminal device is updated at this time, and the first MUD URL and the second MUD URL meet a matching rule; and in this case, the MUD controller may obtain the second MUD file based on the second MUD URL

In this way, the verified valid first MUD URL is used as a trusted basis, and the MUD controller can verify the newly received second MUD URL based on the trusted first MUD URL by using a feature that MUD URLs of a same terminal device meet a specific matching rule, and obtain a corresponding second MUD file based on the valid second MUD URL only when determining that the received second MUD URL is valid. This is applicable to a scenario in which a terminal device is updated, so that it is possible to flexibly, securely, and effectively obtain a MUD file.

In an example, the first message may further carry a digital signature of the second MUD URL. In this case, the method may further include: The MUD controller verifies the second MUD URL based on the digital signature. For example, that the MUD controller verifies the second MUD URL based on the digital signature is specifically: verifying the digital signature based on a public key carried in a manufacturer certificate. The public key carried in the certificate is paired with a private key of the terminal device, and is used to determine a correspondence between the certificate and the terminal device. Digital signature on the second MUD URL may be performed by a private key of a manufacturer. The private key matches a public key of the manufacturer. The public key of the manufacturer is carried in the manufacturer certificate, and the manufacturer certificate may be found by using issuer information carried in the certificate of the terminal device. In other words, the MUD controller may view issuer information carried in the certificate of the terminal device, search for a corresponding manufacturer certificate based on the issuer information, read the public key of the manufacturer from the manufacturer certificate, and verify the digital signature by using the public key of the manufacturer. In this way, by performing digital signature and verification on the second MUD URL, it can be ensured that the second MUD URL used to obtain the second MUD file is a trusted MUD URL that has a valid source and that is not tampered with.

In a possible implementation, the terminal device performs matching verification on the first MUD URL and the second MUD URL, and sends the verified second MUD URL to the MUD controller.

In a possible implementation, the method further includes: The MUD controller performs matching verification on the first MUD URL and the second MUD URL, and obtains the second MUD file based on the verified second MUD URL

In some possible implementations, the first message may further carry the first MUD URL, so that the MUD controller performs more verification based on the first message, to ensure that a MUD file is obtained more securely. In an example, the first message may directly carry the first MUD URL. In this case, the method may further include: The MUD controller obtains the first MUD URL from the first message, and verifies whether the second MUD URL and the first MUD URL meet the matching rule, and if the second MUD URL and the first MUD URL meet the matching rule, the foregoing "obtaining the second MUD file based on the second MUD URL" is performed. In another example, the first message may alternatively carry the certificate of the terminal device, and the certificate carries the first MUD URL. In this case, the method may further include: The MUD controller obtains the certificate from the first message, obtains the first MUD URL from the certificate, and verifies whether the second MUD URL and the first MUD URL carried in the certificate meet the matching rule, and if the second MUD URL and the first MUD URL meet the matching rule, the foregoing "obtaining the second MUD file based on the second MUD URL" is performed. In still another example, to reduce space occupied by certificate transfer in the first message, when issuing the certificate, the manufacturer also stores the certificate in a network. In this way, the first message may alternatively carry a URL of the certificate, and the URL of the certificate indicates a location of the certificate in the network. In this case, the method may further include: The MUD controller obtains the URL of the certificate from the first message, obtains the certificate based on the URL of the certificate, obtains the first MUD URL from the certificate, and verifies whether the second MUD URL and the first MUD URL carried in the certificate meet the matching rule, and if the second MUD URL and the first MUD URL meet the matching rule, the foregoing "obtaining the second MUD file based on the second MUD URL" is performed. In yet another example, the first message may alternatively carry both the certificate and the first MUD URL. In this case, the method may further include: The MUD controller verifies whether the first MUD URL carried in the first message is the same as the first MUD URL carried in the certificate, and if the first MUD URL carried in the first message is the same as the first MUD URL carried in the certificate, the foregoing "obtaining the second MUD file based on the second MUD URL" is performed. It can be learnt that, the first message carries the verified first MUD URL, so that it can be ensured that the second MUD URL used to obtain the second MUD file matches the first MUD URL, in other words, the second MUD URL is a valid MUD URL released by the manufacturer of the terminal device.

In other possible implementations, the matching rule may be locally stored in the terminal device. In this case, the terminal device may directly send the matching rule to the MUD controller. Alternatively, for higher security, the matching rule may be stored in the certificate or the first MUD file. In this case, the MUD controller can obtain the matching rule from the certificate or obtain the matching rule from the first MUD file. Alternatively, the matching rule may be directly configured in the MUD controller, by the manufacturer or a third-party trusted platform. In this case, the MUD controller may directly store the matching rule locally. The matching rule includes any one of the following: a URL prefix matching rule, a URL suffix matching rule, a URL key information matching rule, or a URL pattern matching rule. The URL prefix matching rule is that a to-be-verified MUD URL and a trusted MUD URL have a same prefix. The URL suffix matching rule is that a to-be-verified MUD URL and a trusted MUD URL have a same suffix. The URL key information matching rule is that a to-be-verified MUD URL and a trusted MUD URL have same specific key information, for example, a domain name. The URL pattern matching rule is that a to-be-verified MUD URL and a trusted MUD URL have a same or similar segment of content. It should be noted that the trusted MUD URL that is in the matching rule and that matches the to-be-verified MUD URL may be specifically any MUD URL for which validity verification is performed previously and the verification succeeds, for example, a MUD URL generated when the terminal device is delivered from a factory. In this way, the MUD controller or the terminal device can verify the newly received second MUD URL based on the trusted first MUD URL by using a feature that MUD URLs of a same terminal device meet a specific matching rule, and obtain a corresponding second MUD file based on the valid second MUD URL only when determining that the received second MUD URL and the trusted first MUD URL meet the matching rule, so that it is possible to flexibly, securely, and effectively obtain a MUD file.

According to a second aspect, an embodiment of this application further provides another manufacturer usage description MUD obtaining method. The method is implemented by a terminal device. For example, the method may include: sending a certificate to a MUD controller, where the certificate is used by the MUD controller to verify validity of a first MUD uniform resource locator URL, and obtaining a first MUD file based on the verified first MUD URL; obtaining a second MUD URL when the terminal device is updated, where the second MUD URL is used by the MUD controller to obtain an updated second MUD file, and the first MUD URL and the second MUD URL meet a matching rule; and sending a first message to the MUD controller, where the first message carries the second MUD URL

In an example, for higher security, the first message further carries a digital signature of the second MUD URL. The digital signature is obtained by performing digital signature by a manufacturer corresponding to the terminal device on the second MUD URL by using a private key of the manufacturer, where a public key carried in a manufacturer certificate of the manufacturer and the private key of the manufacturer are paired, and the public key carried in the manufacturer certificate is used to verify the digital signature.

In some possible implementations, the method may further include: The terminal device verifies that the second MUD URL and the first MUD URL meet the matching rule.

In other possible implementations, the MUD controller verifies whether the second MUD URL and the first MUD URL meet the matching rule. In an example, the first message may alternatively carry the first MUD URL, and the first MUD URL is used by the MUD controller to verify that the first MUD URL and the second MUD URL meet the matching rule. In another example, the first message may alternatively carry the certificate, the certificate carries the first MUD URL, and the first MUD URL in the certificate is used by the MUD controller to verify that the first MUD URL and the second MUD URL meet the matching rule. In still another example, the first message alternatively carries a URL of the certificate, the URL of the certificate is used by the MUD controller to obtain the certificate, the certificate carries the first MUD URL, and the first MUD URL in the certificate is used by the MUD controller to verify that the first MUD URL and the second MUD URL meet the matching rule. In still another example, the first message may alternatively carry both the certificate (or the URL of the certificate) and the first MUD URL. In this case, the first MUD URL is used by the MUD controller to verify that the first MUD URL in the first message is the same as the first MUD URL carried in the certificate. It can be learnt that, the first message carries the verified first MUD URL, so that it can be ensured that the second MUD URL used to obtain the second MUD file matches the first MUD URL, in other words, the second MUD URL is a valid MUD URL released by the manufacturer of the terminal device.

In other possible implementations, the matching rule may be locally stored in the terminal device. In this case, the terminal device may directly send the matching rule to the MUD controller. Alternatively, for higher security, the matching rule may be stored in the certificate or the first MUD file. In this case, the MUD controller can obtain the matching rule from the certificate or obtain the matching rule from the first MUD file. Alternatively, the matching rule may be directly configured in the MUD controller, by the manufacturer or a third-party trusted platform. In this case, the MUD controller may directly store the matching rule locally.

The matching rule includes any one of the following: a URL prefix matching rule, a URL suffix matching rule, a URL key information matching rule, or a URL pattern matching rule.

It should be noted that the method provided in the second aspect corresponds to the method provided in the first aspect. For a specific implementation and an achieved effect, refer to related descriptions in the method provided in the first aspect.

According to a third aspect, an embodiment of this application further provides another manufacturer usage description MUD obtaining method. The method is implemented by a MUD controller. For example, the method may include: receiving a first message sent by a terminal device, where the first message carries first MUD URL information, the first MUD URL information indicates variable attribute information of a first MUD URL, and the first MUD URL is used to obtain an updated first MUD file when the terminal device is updated; and obtaining second MUD URL information of the terminal device, where the second MUD URL information indicates fixed attribute information of the first MUD URL. In this case, the MUD controller may obtain the first MUD URL based on the first MUD URL information and the second MUD URL information, and obtain the first MUD file based on the first MUD URL.

In this way, fixed attribute information in a verified valid MUD URL is used as a trusted basis, and the MUD controller obtains a MUD URL of an updated terminal device based on the trusted fixed attribute information and newly received variable attribute information, by using a feature that fixed attribute information of MUD URLs of a same terminal device remains unchanged, determines that the obtained MUD URL is valid, and obtains a corresponding MUD file based on the valid MUD URL. This is applicable to a scenario in which a terminal device is updated, so that it is possible to flexibly, securely, and effectively obtain a MUD file.

In this embodiment of this application, the fixed attribute information indicates a same part of the first MUD URL and the second MUD URL. For example, the fixed attribute information may include first fixed information of the terminal device, and the fixed attribute information may further include a composition rule of the first fixed information in a MUD URL. In an example, the fixed attribute information may be a part of the MUD URL, for example, a fixed URL prefix in the MUD URL: "https://www.huawei.com/mud/router/". In another example, the fixed attribute information may include fixed information of the terminal device and a composition rule of the fixed information in a MUD URL, for example, fixed information 1 (for example, a value huawei of a terminal device vendor field VENDOR and a value router of a device type field DEVICETYPE) and a composition rule (for example, https://www.VENDOR.com/mud/DEVICETYPE/) of the fixed information 1 in the MUD URL Therefore, based on the fixed information 1 and the composition rule of the fixed information 1 in the MUD URL, the fixed attribute information corresponding to the MUD URL may be determined to be "https://www.huawei.com/mud/router/".

The variable attribute information indicates a part that is of the first MUD URL and different from the second MUD URL. The variable attribute information may include second variable information of the terminal device, and the variable attribute information may further include a composition rule of the second variable information in a MUD URL. In an example, the variable attribute information may be a part of the MUD URL, for example, a variable URL suffix in the MUD URL: "firmware_version_1234/os_version_4321.json". In another example, the variable attribute information may include variable information 2 of the terminal device and a composition rule of the variable information 2 in a MUD URL, for example, the variable information 2 (for example, a value 1234 of a terminal device firmware version number field FIRMWARE and a value 4321 of a system version number field OS) and the composition rule (for example, FIRMWARE/OS.json) of the variable information 2. Therefore, based on the variable information 2 and the composition rule of the variable information 2 in the MUD URL, the variable attribute information may be determined to be "firmware_version_1234/os_version_4321.json".

In an example, the first message may further carry a digital signature of the first MUD URL information, and the method may further include: The MUD controller verifies the first MUD URL information based on the digital signature. The digital signature is obtained by signing the first MUD URL information by using a private key of a manufacturer of the terminal device. In this case, that the MUD controller verifies the first MUD URL information based on the digital signature is specifically: verifying the digital signature based on a public key carried in a manufacturer certificate corresponding to the terminal device. In this way, by performing digital signature and verification on the first MUD URL information, it can be ensured that the variable attribute information used to obtain the first MUD file has a valid source and is not tampered with. Therefore, this ensures that the first MUD URL obtained based on the first MUD URL information is valid, and provides a data basis for securely obtaining the first MUD file.

In some possible implementations, the obtaining second MUD URL information of the terminal device may be specifically implemented in a plurality of manners. For example, when the first message includes the second MUD URL information, the "obtaining second MUD URL information of the terminal device" may be specifically: obtaining the second MUD URL information from the first message. For another example, when the first message includes a certificate of the terminal device, the "obtaining second MUD URL information of the terminal device" may be specifically: obtaining the certificate from the first message, and obtaining the second MUD URL information from the certificate. For still another example, when the first message includes a URL of a certificate of the terminal device, and the URL of the certificate indicates a location of the certificate in a network, the method may further include: obtaining the URL of the certificate from the first message, and obtaining the certificate based on the URL of the certificate. In this case, the "obtaining second MUD URL information of the terminal device" may be specifically: obtaining the second MUD URL information from the certificate. For another example, when the first message further includes a certificate (or a URL of the certificate) and the second MUD URL information, the method may further include: verifying that the second MUD URL information carried in the first message is the same as the second MUD URL information carried in the certificate. It can be learnt that, the second MUD URL information is carried in the first message and verified, so that it can be ensured that the second MUD URL information used to obtain the first MUD URL can be verified. This ensures that the obtained first MUD URL is valid, and provides a data basis for securely obtaining the first MUD file.

In other possible implementations, before the "receiving a first message sent by a terminal device", the method may further include: receiving a certificate sent by the terminal device; obtaining a second MUD URL based on the certificate, where the second MUD URL is a MUD URL configured when the terminal device is delivered from a factory; and obtaining a second MUD file based on the second MUD URL

In an example, the certificate includes the second MUD URL information. The second MUD URL information indicates fixed attribute information of the second MUD URL. The method may further include: receiving third MUD URL information sent by the terminal device, where the third MUD URL information indicates variable attribute information of the second MUD URL. In this case, the "obtaining a second MUD URL based on the certificate" may be specifically: obtaining the second MUD URL based on the third MUD URL information and the second MUD URL information carried in the certificate. In this way, before a MUD URL of an updated terminal device is obtained based on trusted fixed attribute information and newly received variable attribute information, and when the terminal device accesses a network for the first time or before this update, a MUD URL currently corresponding to the terminal device can alternatively be determined based on current MUD URL variable attribute information of the terminal device and MUD URL fixed attribute information of the terminal device, to flexibly, securely, and effectively obtain a MUD file based on the currently corresponding MUD URL

In another example, the certificate carries the complete second MUD URL. In this case, the "obtaining a second MUD URL based on the certificate" may be specifically: obtaining the second MUD URL from the certificate. In this example, the method may further include: obtaining the second MUD URL information based on the second MUD file. In this way, before a MUD URL of an updated terminal device is obtained based on trusted fixed attribute information and newly received variable attribute information, and when the terminal device accesses a network for the first time, a trusted MUD URL can alternatively be obtained from a certificate of the terminal device, to flexibly, securely, and effectively obtain a MUD file based on the trusted MUD URL

In some possible implementations, the "obtaining the first MUD URL based on the first MUD URL information and the second MUD URL information" may specifically include: obtaining, according to a preset rule, the first MUD URL based on the first MUD URL information and the second MUD URL information. The preset rule may specifically refer to a combination rule that is between fixed attribute information and variable attribute information and that is defined by a manufacturer based on a requirement and a feature of a MUD URL. The preset rule may be specifically a combination rule described by a text description, or may be a combination rule described by a formula, for example, a regular expression. Any rule that can clearly describe how to generate content of a corresponding complete MUD URL based on the fixed attribute information and the variable attribute information may be used as the preset rule.

For the preset rule, in one case, to improve security of obtaining a MUD file, the preset rule may be content written by a manufacturer into a certificate of a terminal device before the terminal device is delivered from a factory. In this case, the MUD controller may obtain the preset rule from the certificate. In another case, the preset rule may alternatively be written by a manufacturer into a terminal device independent of a certificate before the terminal device is delivered from a factory. In this case, the MUD controller may receive and store the preset rule sent by the terminal device. For security, the preset rule may alternatively carry a digital signature corresponding to the preset rule. In this way, the MUD controller may store the preset rule after the digital signature is verified. In still another case, the preset rule may alternatively be directly configured in the trusted MUD controller, by a manufacturer or a third-party trusted platform.

According to a fourth aspect, an embodiment of this application provides a manufacturer usage description MUD obtaining method. The method is implemented by a terminal device. For example, the method may include: obtaining first MUD URL information, where the first MUD URL information indicates variable attribute information of a first MUD URL, and the first MUD URL is used by a MUD controller to obtain an updated first MUD file when the terminal device is updated; and sending a first message to the MUD controller, where the first message carries the first MUD URL information, so that the MUD controller determines the first MUD uniform resource locator URL based on the first MUD URL information and the second MUD URL information, and obtains the first MUD file by using the first MUD URL, where the second MUD URL information indicates fixed attribute information of the first MUD URL

In this embodiment of this application, the fixed attribute information indicates a same part of the first MUD URL and a second MUD URL. The fixed attribute information may include first fixed information of the terminal device, and may further include a composition rule of the first fixed information in a MUD URL. The variable attribute information indicates a part that is of the first MUD URL and different from the second MUD URL. The variable attribute information may include second variable information of the terminal device, and may further include a composition rule of the second variable information in a MUD URL

In an example, the first message may further carry a digital signature of the first MUD URL information. The digital signature is obtained by performing digital signature by a manufacturer corresponding to the terminal device on the first MUD URL information by using a private key of the manufacturer, where a public key carried in a manufacturer certificate of the manufacturer and the private key of the manufacturer are paired, and the public key carried in the manufacturer certificate is used to verify the digital signature.

In some possible implementations, the first message may further directly carry the second MUD URL information. Alternatively, the first message may further carry a certificate of the terminal device, and the certificate carries the second MUD URL information. Alternatively, the first message may further carry a URL of a certificate of the terminal device, the URL of the certificate indicates a location of the certificate in a network, and the certificate carries the second MUD URL information. Alternatively, the first message further carries the certificate (or the URL of the certificate) and the second MUD URL information, and the second MUD URL information is used by the MUD controller to verify that the second MUD URL information in the first message is the same as the second MUD URL information carried in the certificate. It can be learnt that, the second MUD URL information is carried in the first message and verified by the MUD controller, so that it can be ensured that the second MUD URL information used to obtain the first MUD URL can be verified. This ensures that the obtained first MUD URL is valid, and provides a data basis for securely obtaining the first MUD file.

In other possible implementations, before the "sending a first message to the MUD controller", the method may further include: sending a certificate to the MUD controller, so that the MUD controller obtains a second MUD URL based on the certificate and obtains a second MUD file based on the second MUD URL, where the second MUD URL is a MUD URL configured when the terminal device is delivered from a factory.

In an example, the certificate includes the second MUD URL information, the second MUD URL information indicates fixed attribute information of the second MUD URL, and the method may further include: sending third MUD URL information to the MUD controller, where the third MUD URL information and the second MUD URL information carried in the certificate are used by the MUD controller to obtain the second MUD URL, and the third MUD URL information indicates variable attribute information of the second MUD URL

In another example, the certificate carries the complete second MUD URL, and the certificate is used by the MUD controller to obtain the complete second MUD URL. The second MUD file carries the second MUD URL information.

In still other possible implementations, the first message further carries a preset rule, and the preset rule is used by the MUD controller to determine the first MUD URL. The preset rule may specifically refer to a combination rule that is between fixed attribute information and variable attribute information and that is defined by a manufacturer based on a requirement and a feature of a MUD URL. The preset rule may be, for example, a combination rule described by a text description, or may be a combination rule described by a formula, for example, a regular expression. Any rule that can clearly describe how to generate content of a corresponding complete MUD URL based on the fixed attribute information and the variable attribute information may be used as the preset rule.

It should be noted that the method provided in the fourth aspect corresponds to the method provided in the third aspect. For a specific implementation and an achieved effect, refer to related descriptions in the method provided in the third aspect.

According to a fifth aspect, this application further provides a manufacturer usage description MUD controller, including a transceiver unit and a processing unit. The transceiver unit is configured to perform a sending/receiving operation in the method provided in the first aspect or the third aspect. The processing unit is configured to perform an operation other than the sending/receiving operation in the first aspect or the third aspect. For example, when the MUD controller executes the method according to the first aspect, the transceiver unit may be configured to receive a first message sent by a terminal device, where the first message carries a second MUD URL. The processing unit may be configured to verify validity of a first MUD URL based on a certificate sent by the terminal device. The processing unit may be further configured to obtain a first MUD file based on the verified first MUD URL. The processing unit may be further configured to obtain a second MUD file based on the second MUD URL. For another example, when the MUD controller executes the method according to the third aspect, the transceiver unit may be configured to receive a first message sent by a terminal device, where the first message carries first MUD URL information. The processing unit may be configured to obtain second MUD URL information of the terminal device. The processing unit may be further configured to obtain a first MUD URL based on the first MUD URL information and the second MUD URL information. The processing unit may be further configured to obtain a first MUD file based on the first MUD URL

According to a sixth aspect, an embodiment of this application further provides a terminal device, including a transceiver unit and a processing unit. The transceiver unit is configured to perform a sending/receiving operation in the method provided in the second aspect or the fourth aspect. The processing unit is configured to perform an operation other than the sending/receiving operation in the second aspect or the fourth aspect. For example, when the terminal device executes the method according to the second aspect, the transceiver unit may be configured to send a certificate to a MUD controller. The processing unit is configured to obtain a second MUD URL. The transceiver unit may be further configured to send a first message to the MUD controller, where the first message carries the second MUD URL. For another example, when the terminal device executes the method according to the fourth aspect, the transceiver unit may be configured to send a first message to a MUD controller. The processing unit is configured to obtain first MUD URL information.

According to a seventh aspect, an embodiment of this application further provides a manufacturer usage description MUD controller, including a communication interface and a processor. The communication interface is configured to perform a sending/receiving operation in the method provided in the first aspect or the third aspect. The processor is configured to perform an operation other than the sending/receiving operation in the method provided in any one of the first aspect or the possible implementations of the first aspect, or any one of the third aspect or the possible implementations of the third aspect.

According to an eighth aspect, an embodiment of this application further provides a terminal device, including a communication interface and a processor. The communication interface is configured to perform a sending/receiving operation in the method provided in any one of the second aspect or the possible implementations of the second aspect, or any one of the fourth aspect or the possible implementations of the fourth aspect. The processor is configured to perform an operation other than the sending/receiving operation in the method provided in any one of the second aspect or the possible implementations of the second aspect, or any one of the fourth aspect or the possible implementations of the fourth aspect.

According to a ninth aspect, an embodiment of this application further provides a manufacturer usage description MUD controller. The MUD controller includes a memory and a processor. The memory includes computer-readable instructions. The processor that communicates with the memory is configured to execute the computer-readable instructions, so that the MUD controller is configured to perform the method provided in any one of the first aspect or the possible implementations of the first aspect, or any one of the third aspect or the possible implementations of the third aspect.

According to a tenth aspect, an embodiment of this application further provides a terminal device. The terminal device includes a memory and a processor. The memory includes computer-readable instructions. The processor that communicates with the memory is configured to execute the computer-readable instructions, so that the terminal device is configured to perform the method provided in any one of the second aspect or the possible implementations of the second aspect, or any one of the fourth aspect or the possible implementations of the fourth aspect.

According to an eleventh aspect, an embodiment of this application further provides a computer-readable storage medium. The computer-readable storage medium stores instructions. When the instructions are run on a computer, the computer is enabled to perform the method provided in any one of the first aspect, the second aspect, the third aspect, the fourth aspect, or the possible implementations of any one of the foregoing aspects.

According to a twelfth aspect, an embodiment of this application further provides a computer program product, including a computer program or computer-readable instructions. When the computer program or the computer-readable instructions is/are run on a computer, the computer is enabled to perform the method provided in any one of the first aspect, the second aspect, the third aspect, the fourth aspect, or the possible implementations of any one of the foregoing aspects.

According to a thirteenth aspect, an embodiment of this application further provides a communication system. The communication system includes the MUD controller provided in the fifth aspect, the seventh aspect, or the ninth aspect and the terminal device provided in the sixth aspect, the eighth aspect, or the tenth aspect.

### BRIEF DESCRIPTION OF DRAWINGS

FIG. 1 is a schematic diagram of a framework of a network 100 in an application scenario according to an embodiment of this application;
FIG. 2 is a signaling flowchart of a MUD file obtaining method 100 according to an embodiment of this application;
FIG. 3 is a signaling flowchart of a MUD file obtaining method 200 according to an embodiment of this application;
FIG. 4 is a signaling flowchart of a MUD file obtaining method 300 according to an embodiment of this application;
FIG. 5 is a schematic flowchart of a MUD file obtaining method 400 according to an embodiment of this application;
FIG. 6 is a schematic flowchart of a MUD file obtaining method 500 according to an embodiment of this application;
FIG. 7 is a schematic flowchart of a MUD file obtaining method 600 according to an embodiment of this application;
FIG. 8 is a schematic flowchart of a MUD file obtaining method 700 according to an embodiment of this application;
FIG. 9 is a schematic diagram of a structure of a MUD controller 900 according to an embodiment of this application;
FIG. 10 is a schematic diagram of a structure of a terminal device 1000 according to an embodiment of this application;
FIG. 11 is a schematic diagram of a structure of another MUD controller 1100 according to an embodiment of this application;
FIG. 12 is a schematic diagram of a structure of another terminal device 1200 according to an embodiment of this application;
FIG. 13 is a schematic diagram of a structure of still another MUD controller 1300 according to an embodiment of this application;
FIG. 14 is a schematic diagram of a structure of still another terminal device 1400 according to an embodiment of this application; and
FIG. 15 is a schematic diagram of a structure of a communication system 1500 according to an embodiment of this application.

### DESCRIPTION OF EMBODIMENTS

The following describes technical solutions of embodiments in this application with reference to accompanying drawings. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Ordinal numbers such as "1", "2", "3", "first", "second", and "third" in this application are used to distinguish between a plurality of objects, but are not used to limit a sequence of the plurality of objects.

"A and/or B" mentioned in this application should be understood as including the following cases: Only A is included, only B is included, or both A and B are included.

For related content of the MUD file in this application, refer to related descriptions of the Internet Engineering Task Force (English: Internet Engineering Task Force, IETF for short) Request For Comments (English: Request For Comments, RFC for short) 8520: "Manufacturer Usage Description Specification". The foregoing standard is incorporated in this application by reference in its entirety.

It should be noted that, because types and a quantity of terminal devices continuously increase, various terminal devices need to be more strictly constrained in a network. Therefore, before each terminal device is delivered from a factory, a manufacturer usually generates a corresponding MUD file in a targeted manner. Content of the MUD file may specifically include a device type, network access permission, and the like of the terminal device. The MUD file is used to constrain the terminal device when the terminal device accesses a network.

In embodiments of this application, the terminal device may be any device that needs to access a network through a network device, for example, a personal computer, a printer, a camera, a smart LED lamp, or a conference room projection device.

RFC 8520 is a set of protocol frameworks in which a MUD file is a core. According to RFC 8520, to save storage space on a terminal device, a manufacturer of the terminal device usually stores a generated MUD file on a MUD file server, and a URL (referred to as MUD URL in the following) corresponding to the MUD file is stored in the terminal device. When a terminal device accesses a network, the terminal device may send a MUD URL to a network device connected to the terminal device. The network device sends the MUD URL to a MUD controller. The MUD controller obtains a corresponding MUD file from a MUD file server based on the MUD URL, and maps content of the MUD file to a network policy to constrain a network behavior of the terminal device.

It should be noted that, in embodiments of this application, the MUD controller is an absolutely trusted and secure device by default. According to usage in RFC 8520, the MUD controller may be a MUD Manager (which may also be referred to as a MUD Controller).

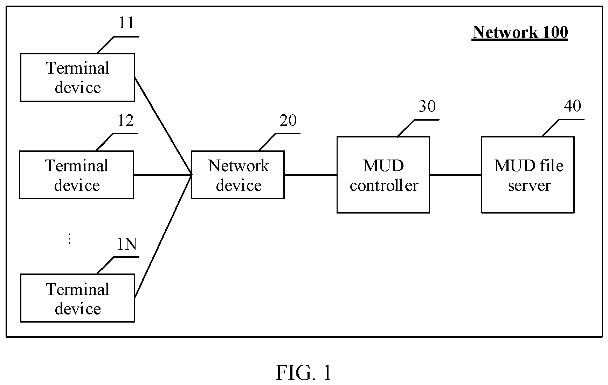

The following uses a scenario shown in FIG. 1 as an example to describe a current manner of obtaining a MUD file and an existing problem.

FIG. 1 is a schematic diagram of a network architecture in a possible example scenario to which an embodiment of this application is applicable. As shown in FIG. 1, a network 100 includes: a terminal device 11, a terminal device 12, ..., a terminal device IN (where N is an integer greater than 1), a network device 20, a MUD controller 30, and a MUD file server 40. The network device 20 may be an access device that accesses a network and that is of the terminal device 11, the terminal device 12, ..., or the terminal device IN (where N is an integer greater than 1), for example, a switch, a router, or a firewall. The MUD controller 30 may be any physical device that can implement a MUD Manager function, or may be a functional module that can implement a MUD Manager function. As a functional module, the MUD controller 30 may be integrated into any network device (for example, the network device 20). For example, when the MUD controller 30 is integrated in the network device 20 as a functional module, the MUD controller 30 can exchange data with the network device 20, and can also interact with each terminal device through a communication interface of the network device 20, to implement a function of constraining a corresponding terminal device based on each MUD file. The MUD controller 30 can obtain a MUD file, obtain a corresponding network policy based on the MUD file, and configure the network policy on the network device 20, so that the network device 20 constrains a corresponding terminal device according to the network policy.

In an example, a manufacturer may directly store a MUD URL in each terminal device. In this case, the terminal device 11 is used as an example, and a process of obtaining a MUD file may include the following steps. S11: When the terminal device 11 connects to a network for the first time, the terminal device 11 sends a message to the network device 20, where the message may be, for example, a link layer discovery protocol (English: Link Layer Discovery Protocol, LLDP for short) request message or a dynamic host configuration protocol (English: Dynamic Host Configuration Protocol, DHCP for short) request message, and the terminal device 11 includes a MUD URL 1 in the message. S12: The network device 20 obtains the MUD URL 1, and directly or indirectly sends the MUD URL 1 to the MUD controller 30. S13: The MUD controller 30 accesses the MUD file server 40 based on the MUD URL 1, and obtains a MUD file 1 corresponding to the MUD URL 1. S14: The MUD controller 30 obtains a network policy 1 based on the MUD file 1, and applies the network policy 1 to the network device 20. S15: The network device 20 to which the network policy 1 is applied constrains a network behavior of the terminal device 11. The network behavior may include, for example, one or more of network access permission, defined bandwidth, and a network priority of the terminal device 11.

In this example, the terminal device sends the MUD URL to the network device by using, for example, the LLDP request message or the DHCP request message. The MUD URL is easily tampered with and forged, and the network device and the MUD controller cannot identify whether the received MUD URL is valid. Consequently, the manner of obtaining a MUD file is not secure enough.

In another example, to overcome a problem that obtaining a MUD file in the foregoing manner is not secure enough, a manufacturer may include a MUD URL in a certificate issued to each terminal device at delivery, and store the MUD URL in each terminal device along with the certificate. The terminal device 11 is still used as an example. A process of obtaining a MUD file may include the following steps. S21: When the terminal device 11 connects to a network for the first time, the terminal device 11 sends an 802.1X (that is, a client/server (English: Client/Server)-based access control and authentication protocol) request message to the network device 20, where the request message carries a certificate 1, and the certificate 1 carries a MUD URL 1. S22: The network device 20 obtains the certificate 1, and directly or indirectly sends the certificate 1 to the MUD controller 30. S23: The MUD controller 30 verifies the certificate 1, and after determining that the certificate 1 is valid, obtains the MUD URL 1 from the certificate 1, and accesses, based on the MUD URL 1, the MUD file server 40 of a manufacturer to obtain a MUD file 1 corresponding to the MUD URL 1. S24: The MUD controller 30 obtains a corresponding network policy 1 based on the MUD file 1, and applies the network policy 1 to the network device 20. S25: The network device 20 to which the network policy 1 is applied constrains a network behavior of the terminal device 11.

In this example, because the certificate of the terminal device is digitally signed by the manufacturer at delivery, the MUD controller may determine, by verifying the certificate, that the certificate is valid and content in the certificate is not tampered with. In this way, it can be ensured that the MUD URL carried in the certificate is valid, and security of the manner of obtaining the MUD file is ensured to some extent. For a terminal device that is not updated, a MUD file generated at delivery can be always used. However, for a terminal device that is updated, for example, a terminal device whose firmware version or system version is updated, and for another example, a terminal device whose MUD file needs to be updated because of a specific network reason or a specific manufacturer reason, a manufacturer needs to update network access permission, defined bandwidth, and the like of the updated terminal device, that is, the manufacturer updates the MDU file of the updated terminal device. However, when the MUD URL used to access the MUD file is carried in the certificate issued at delivery of the terminal device, content of the certificate cannot be changed, that is, the MUD URL in the certificate in the terminal device cannot be updated. In addition, each terminal device has a unique private key in a manufacturing process. When a manufacturer verifies the private key on the terminal device, and when the verification succeeds, it is determined that an identity of the terminal device is valid, so as to issue a certificate for the terminal device. That is, a public key in the certificate and the private key of the terminal device are paired. Therefore, after the terminal device is delivered from a factory, it is difficult for the manufacturer to believe that the private key on the terminal device is absolutely secure, and basically cannot securely reissue a new certificate for the terminal device. Consequently, the method for obtaining a MUD file based on a MUD URL carried in a certificate is not flexible enough. In a scenario in which a terminal device is updated, an updated MUD file cannot be accurately obtained by using an updated MUD URL. The method cannot be applied to the scenario in which a terminal device is updated.

Based on this, in embodiments of this application, a manufacturer usage description MUD file obtaining method is provided. The method not only can ensure that a MUD file is securely obtained when a terminal device accesses a network for the first time, but also enable a MUD controller corresponding to the terminal device to securely and effectively obtain a changed MUD URL when the terminal device is updated, so as to obtain an updated MUD file.

In the first possible implementation, in this embodiment of this application, the MUD controller uses, as a trusted basis, a first MUD URL that is verified to be valid before a current update. When the terminal device is currently updated, the terminal device sends a new second MUD URL to the MUD controller. If the second MUD URL and the trusted first MUD URL meet a matching condition, it represents that the second MUD URL is valid. Therefore, the MUD controller may obtain a new second MUD file based on the second MUD URL. In this way, a function of securely and effectively obtaining a MUD file in a terminal device update scenario is implemented.

For example, the network 100 shown in FIG. 1 is still used as an example. A specific implementation process of this implementation may include the following steps. S31: When the terminal device 11 connects to a network for the first time, the terminal device 11 sends a certificate 1 to the MUD controller 30, where the certificate 1 carries a MUD URL 1. S32: The MUD controller 30 verifies the certificate 1, and after determining that the certificate 1 is valid, obtains the MUD URL 1 from the certificate 1, and accesses the MUD file server 40 of a manufacturer based on the MUD URL 1 to obtain a MUD file 1 corresponding to the MUD URL 1. S33: The MUD controller 30 obtains a corresponding network policy 1 based on the MUD file 1, and applies the network policy 1 to the network device 20, so that the network device 20 constrains a network behavior of the terminal device 11. When the terminal device 11 is updated, the corresponding MUD file is updated to a MUD file 2, and the MUD file 2 corresponds to a MUD URL 2 on the MUD file server 40. In this case, this embodiment of this application further includes the following steps. S34: The terminal device 11 receives the MUD URL 2, and sends the MUD URL 2 to the MUD controller 30. S35: The MUD controller 30 determines, based on the MUD URL 1 and the MUD URL 2, whether the MUD URL 2 is valid, for example, determines whether the MUD URL 2 and the MUD URL 1 meet a matching rule (for example, a URL prefix matching rule), and if it is determined that the MUD URL 2 is valid, accesses the MUD file server 40 of the manufacturer based on the MUD URL 2 to obtain the MUD file 2 corresponding to the MUD URL 2. S36: The MUD controller 30 obtains a corresponding network policy 2 based on the MUD file 2, and applies the network policy 2 to the network device 20, so that the network device 20 constrains a network behavior of the terminal device 11.

In this way, the verified valid MUD URL is used as a trusted basis, and the MUD controller can verify the newly received MUD URL based on the trusted MUD URL by using a feature that MUD URLs of a same terminal device meet a specific matching rule, and obtain a corresponding MUD file based on the valid MUD URL only when determining that the received MUD URL is valid. This is applicable to a scenario in which a terminal device is updated, so that it is possible to flexibly, securely, and effectively obtain a MUD file.

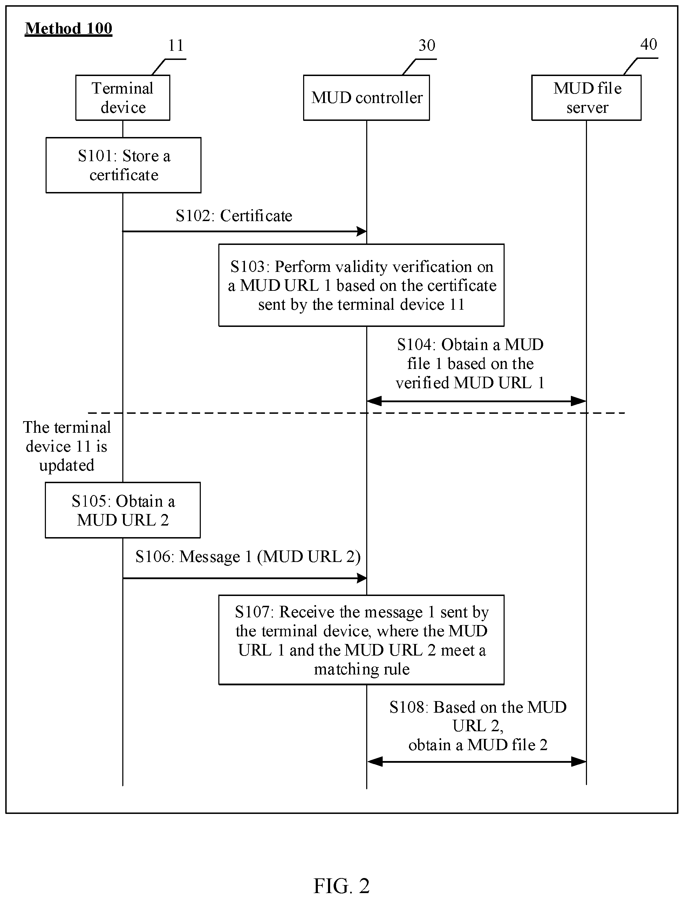

It should be noted that, for specific implementation details and effects, refer to related descriptions in the following method 100 shown in FIG. 2. Details are not described herein again.

In the second possible implementation, in this embodiment of this application, the manufacturer may split a MUD URL into fixed attribute information and variable attribute information based on a feature of the MUD URL. The fixed attribute information is content that is in the MUD URL corresponding to the terminal device and that does not change regardless of how the terminal device is updated. The variable attribute information is content that is in the MUD URL and that may change with an update of the terminal device. When the terminal device is delivered from a factory, the terminal device may send third MUD URL information (that is, the variable attribute information) and second MUD URL information (that is, the fixed attribute information) carried in a certificate to the MUD controller. After verifying the certificate, the MUD controller synthesizes a second MUD URL based on the second MUD URL information and the third MUD URL information, so as to obtain a second MUD file based on the second MUD URL Because the second MUD URL information is carried in the certificate, and verification for the certificate succeeds, the MUD controller determines that the second MUD URL information is trusted information. Based on this, when the terminal device is updated, the terminal device may send only new variable attribute information, namely, first MUD URL information, to the MUD controller. In this case, the MUD controller may synthesize a first MUD URL based on the first MUD URL information and the trusted second MUD URL information, so as to obtain a first MUD file based on the first MUD URL. In this way, a function of securely and effectively obtaining a MUD file in a terminal device update scenario is implemented.

For example, the network 100 shown in FIG. 1 is still used as an example. An implementation process of this implementation may include the following steps. S41: When the terminal device 11 connects to a network for the first time, the terminal device 11 sends a certificate 1 and MUD URL information 3 to the MUD controller 30, where the certificate 1 carries MUD URL information 2. S42: The MUD controller 30 verifies the certificate 1, and after determining that the certificate 1 is valid, obtains the MUD URL information 2 from the certificate 1, generates a MUD URL 2 based on the MUD URL information 2 and the MUD URL information 3, and accesses the MUD file server 40 of a manufacturer based on the MUD URL 2 to obtain a MUD file 2 corresponding to the MUD URL 2. S43: The MUD controller 30 obtains a corresponding network policy 2 based on the MUD file 2, and applies the network policy 2 to the network device 20, so that the network device 20 constrains a network behavior of the terminal device 11. When the terminal device 11 is updated, the corresponding MUD file is updated to a MUD file 1, and the MUD file 1 corresponds to a MUD URL 1 on the MUD file server 40. The MUD URL 1 includes MUD URL information 1 and the MUD URL information 2. In this case, this embodiment of this application may further include the following steps. S44: The terminal device 11 receives the MUD URL information 1, and sends the MUD URL information 1 to the MUD controller 30. S45: The MUD controller 30 synthesizes the MUD URL 1 based on the MUD URL information 1 and the MUD URL information 2, and accesses the MUD file server 40 of the manufacturer based on the MUD URL 1 to obtain the MUD file 1 corresponding to the MUD URL 1. S46: The MUD controller 30 obtains a corresponding network policy 1 based on the MUD file 1, and applies the network policy 1 to the network device 20, so that the network device 20 constrains a network behavior of the terminal device 11.

In this way, fixed attribute information in a verified valid MUD URL is used as a trusted basis, and the MUD controller obtains a MUD URL of an updated terminal device based on the trusted fixed attribute information and newly received variable attribute information, by using a feature that fixed attribute information of MUD URLs of a same terminal device remains unchanged, determines that the obtained MUD URL is valid, and obtains a corresponding MUD file based on the valid MUD URL. This is applicable to a scenario in which a terminal device is updated, so that it is possible to flexibly, securely, and effectively obtain a MUD file.

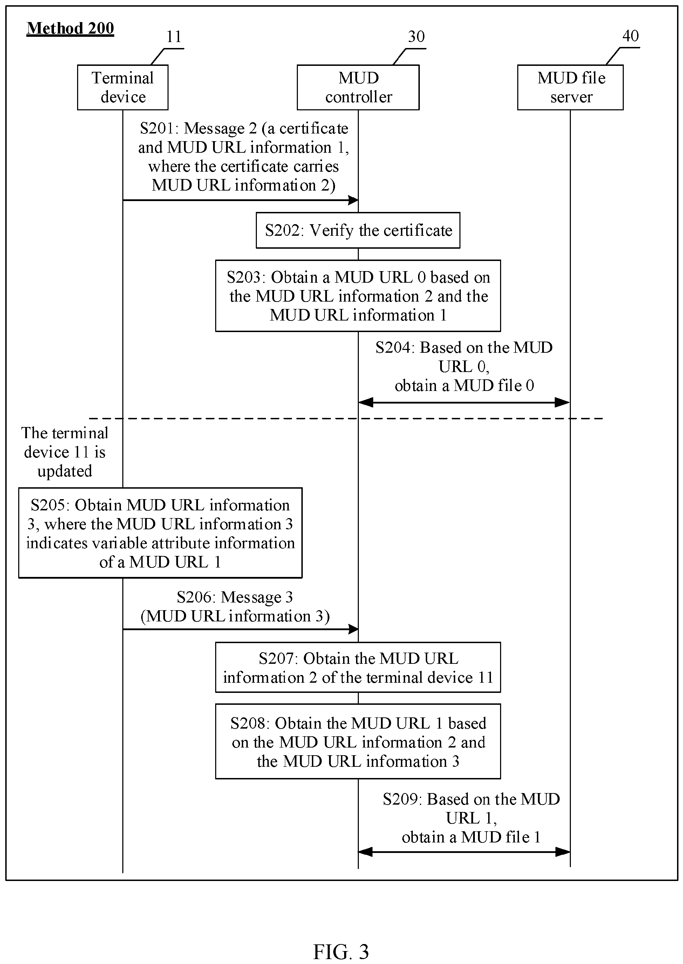

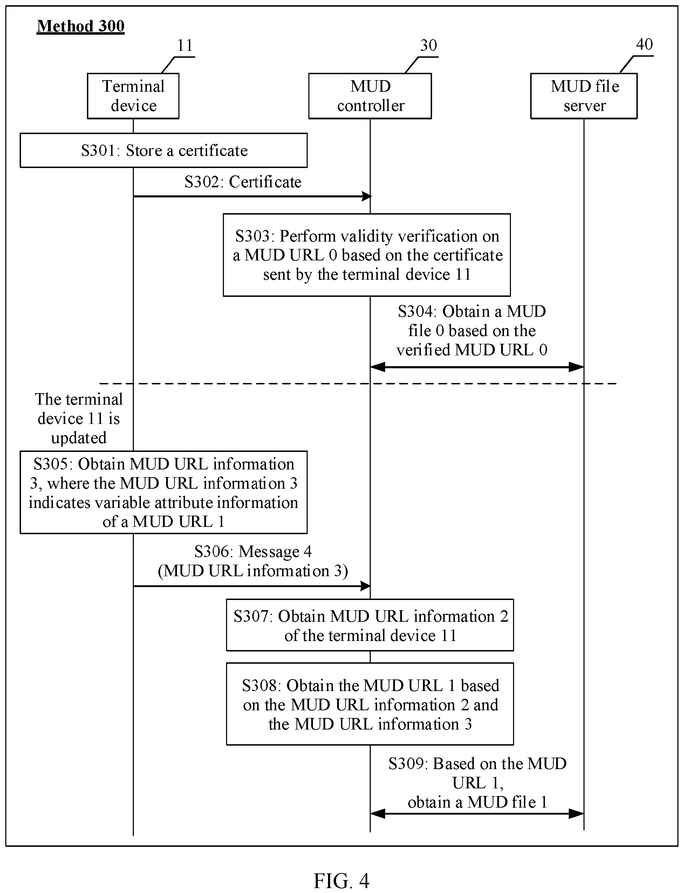

It should be noted that, for specific implementation details and effects, refer to related descriptions in the following method 200 shown in FIG. 3 and method 300 shown in FIG. 4. Details are not described herein again.

It may be understood that, the scenario is merely a scenario example provided in embodiments of this application, but embodiments of this application are not limited to the scenario.

With reference to the accompanying drawings, the following describes in detail a specific implementation of a MUD file obtaining method in embodiments of this application by using embodiments.

With reference to FIG. 2, the following uses the network 100 shown in FIG. 1 as an example, and specifically uses the terminal device 11 in the network 100 as an example to describe a MUD file obtaining method 100 according to an embodiment of this application.

FIG. 2 shows the MUD file obtaining method 100 according to the embodiment of this application. The method 100 may include the following S101 to S108.

S101: The terminal device 11 stores a certificate.

The certificate is issued by a manufacturer of the terminal device 11 to the terminal device 11 before the terminal device 11 is delivered from a factory. Specifically, after a signature server of the manufacturer performs digital signature on the certificate of the terminal device 11, the certificate is locally stored in the terminal device 11.

In addition to common content, the certificate further includes a MUD URL 0 (which may also be referred to as a basic MUD URL) corresponding to a MUD file 0 configured when the terminal device 11 enters or leaves the factory. The common content of the certificate may include, for example, one or more of the following: a version number, a serial number, a signature algorithm identifier, issuer information, a validity period, user information, public key information, and an extension field. The version number is a version number of the certificate. The serial number is a number allocated by the manufacturer to the certificate, and may uniquely identify the certificate. The signature algorithm identifier refers to an algorithm for protecting security of the certificate and a related parameter. For example, the signature algorithm identifier may include a message-digest algorithm (English: Message-Digest Algorithm, MD5 for short), an RSA encryption algorithm, and a related parameter. For another example, when security protection is not performed, the signature algorithm identifier may be empty. The issuer information refers to related information about the manufacturer, and may specifically include a country, a state, a province, an organizational unit, an organization unit department, a name, and an email of the manufacturer. The validity period may include a start time point and an end time point. The user information refers to related information about a user to which the terminal device 11 corresponding to the certificate belongs, and may specifically include a country, a state, a province, an organizational unit, an organizational unit department, a name, and an email of the terminal device 11. The public key information refers to related information about a public key for performing security protection on the certificate, for example, may include a public key 1, a used public key encryption algorithm, and a corresponding parameter. The extension field may include one or more to-be-extended data items.

It should be noted that the public key in the public key information in the certificate is paired with a private key stored in the terminal device. In this way, the certificate may correspond to the terminal device by using the paired public and private keys. Performing digital signature on the certificate is that a certificate authority of the terminal device (that is, an upper-level certificate of the certificate) performs digital signature on certificate content by using a private key of the certificate authority, and a public key corresponding to the private key used for performing digital signature on the certificate is stored in public key information of the upper-level certificate of the certificate. Generally, related information about the upper-level certificate that performs digital signature on the certificate can be found through query in the issuer information of the certificate of the terminal device, so that the upper-level certificate is found by using the related information about the upper-level certificate, and the digital signature of the certificate of the terminal device is verified based on the public key in the public key information of the upper-level certificate.

In this embodiment of this application, the MUD URL 0 may be specifically carried in the extension field of the certificate. The extension field may further carry a matching rule corresponding to the terminal device 11. For example, a field 1 may be extended in the extension field of the certificate, where a value of a field in the field 1 indicates the MUD URL 0 of the terminal device 11 at delivery. For another example, a field 2 may be extended in the extension field of the certificate, where a value of a field in the field 2 indicates the matching rule corresponding to the terminal device 11.

It should be noted that, in addition to storing the certificate, the terminal device 11 may further separately store the MUD URL 0 currently corresponding to the terminal device 11, where the MUD URL 0 is used to obtain the MUD file 0 that is generated for the terminal device 11 at delivery.

S102: The terminal device 11 sends the certificate to a MUD controller 30.

When the terminal device 11 accesses a network for the first time, the terminal device 11 may perform S102 to send the certificate to the MUD controller 30. Alternatively, when the terminal device 11 is updated, the terminal device 11 may also perform S102 to send the certificate to the MUD controller 30.

During specific implementation, the terminal device 11 may send a request message to the MUD controller 30, where the request message carries the certificate. In an example, the terminal device 11 may send an 802.1X request message to the MUD controller 30, where the request message carries the certificate. In another example, the terminal device 11 may alternatively send a DHCP request message or an LLDP request message to the MUD controller 30, where the request message may carry the certificate by extending an option (English: OPTION) field or a type-length-value (English: Type-Length-Value, TLV for short) field. In another example, the manufacturer may alternatively store, on a network, the certificate issued for the terminal device 11, and store, in the terminal device 11, both the certificate and a certificate URL that identifies a location at which the certificate is stored on the network. In this case, to reduce a length of a request message occupied by the certificate when S 102 is performed, the certificate URL may be carried in the request message. The MUD controller 30 may alternatively obtain, based on the certificate URL, the certificate corresponding to the certificate URL from the network.

S103: The MUD controller 30 verifies validity of a MUD URL 1 based on the certificate sent by the terminal device 11.

S104: The MUD controller 30 obtains a MUD file 1 based on the verified MUD URL 1.

When the terminal device 11 accesses a network for the first time, the MUD URL 1 in S103 and S104 is the MUD URL 0 corresponding to the MUD file 0 generated when the terminal device 11 is delivered from a factory, and the MUD file 1 in S 104 is the MUD file 0 generated when the terminal device 11 is delivered from a factory.

In an example, if the MUD controller 30 receives only the certificate, the MUD controller 30 may verify the certificate. When the certificate is determined to be valid, it represents that content in the certificate is also valid. In other words, validity verification on the MUD URL 1 is completed, and the MUD URL 1 is determined to be valid. Therefore, the MUD controller 30 obtains the verified MUD URL 1 from the certificate. Therefore, the MUD controller 30 obtains the MUD file 1 based on the MUD URL 1.

In another example, if the MUD controller 30 receives the certificate and the MUD URL 1, the MUD controller 30 may first verify the certificate, and when determining that the certificate is valid, obtain a trusted MUD URL 1 from the certificate, and compare whether the trusted MUD URL 1 carried in the certificate is the same as the received MUD URL 1. If the trusted MUD URL 1 is the same as the received MUD URL 1, it is considered that the received MUD URL 1 is valid, and if the trusted MUD URL 1 is different from the received MUD URL 1, it is considered that the received MUD URL 1 is invalid. In this way, validity verification on the MUD URL 1 is completed. It should be noted that, if it is determined that the certificate is valid and the trusted MUD URL 1 carried in the certificate is the same as the received MUD URL 1, the MUD controller 30 may obtain the MUD file 1 based on the MUD URL 1 carried in the certificate (or the received MUD URL 1). If it is determined that the certificate is valid, but the trusted MUD URL 1 carried in the certificate is different from the received MUD URL 1, the MUD controller 30 may also obtain the MUD file 1 based on the MUD URL 1 carried in the certificate. However, for higher security, the MUD controller 30 may also report an exception that "the trusted MUD URL 1 carried in the certificate is different from the received MUD URL 1" to a related device of the manufacturer to check and maintain the terminal device 11.

It should be noted that verifying the certificate specifically refers to verifying the certificate based on the digital signature of the certificate. For example, it is assumed that a process in which the signature server of the manufacturer performs digital signature on the certificate by using a private key a is as follows: performing hash processing on the certificate by using a hash algorithm 1, to obtain digest information 1 of the certificate; and encrypting the digest information 1 by using the private key a, to obtain a digital signature 1. The MUD controller 30 has a public key A corresponding to the private key a. In this case, a process in which the MUD controller 30 verifies the certificate may include: performing hash processing on the certificate by using the hash algorithm 1, to obtain digest information 2 of the certificate; decrypting the digital signature 1 by using the public key A to obtain digest information 3; and comparing the digest information 2 with the digest information 3 to determine whether the digest information 2 is consistent with the digest information 3. If the digest information 2 is consistent with the digest information 3, it is determined that the certificate has a valid source and content is not tampered with, and verification on the certificate succeeds; otherwise, it is determined that verification on the certificate fails.

When the terminal device 11 is updated, the MUD URL 1 in S103 and S104 is a MUD URL corresponding to the MUD file 1 generated during a current update of the terminal device 11, and the MUD file 1 in S104 is a MUD file generated during the current update of the terminal device 11.

In an example, if the MUD controller 30 may also receive the certificate of the terminal device 11 and the MUD URL 0 when receiving the MUD URL 1 sent by the terminal device 11, the MUD controller 30 may first verify the certificate, and when determining that the certificate is valid, determine that the MUD URL 0 in the certificate is trusted. In this case, the MUD controller 30 may continue to verify whether the MUD URL 0 carried in the certificate is the same as the received MUD URL 0, to obtain a verification result 1. Validity of the MUD URL 1 may be further verified. This may be specifically: determining whether the MUD URL 1 and the trusted MUD URL 0 meet the matching rule, to obtain a verification result 2. If both the verification result 1 and the verification result 2 indicate that verification succeeds, it is determined that the MUD URL 1 is valid, so as to obtain the MUD file 1 based on the MUD URL 1. If at least one of the verification result 1 and the verification result 2 indicates that verification fails, it is determined that the MUD URL 1 is invalid, and S104 is not performed. That the verification result 1 indicates that verification succeeds means that the MUD URL 0 carried in the certificate is the same as the received MUD URL 0. That the verification result 2 indicates that verification succeeds means that the MUD URL 1 is valid, for example, the MUD URL 1 and the trusted MUD URL 0 meet the matching rule.

In another example, if the MUD controller 30 may also receive the certificate of the terminal device 11 when receiving the MUD URL 1 sent by the terminal device 11, the MUD controller 30 may first verify the certificate, and when determining that the certificate is valid, determine that the MUD URL 0 in the certificate is trusted. In this case, validity of the MUD URL 1 may be further verified. This may be specifically: determining whether the MUD URL 1 and the trusted MUD URL 0 meet the matching rule; and if the MUD URL 1 and the trusted MUD URL 0 meet the matching rule, determining that the MUD URL 1 is valid, so as to obtain the MUD file 1 based on the MUD URL 1; or if the MUD URL 1 and the trusted MUD URL 0 do not meet the matching rule, determining that the MUD URL 1 is invalid, and S 104 is not performed.

In still another example, S103 may be specifically as follows: The MUD controller 30 previously determines, based on the certificate, that a specific MUD URL 1' is trusted, and locally stores the MUD URL 1' in the MUD controller 30. In this case, validity verification may be performed on the newly received MUD URL 1 by using the MUD URL 1'. This may be specifically: determining whether the MUD URL 1 and the trusted MUD URL 1' meet the matching rule; and if the MUD URL 1 and the trusted MUD URL 1' meet the matching rule, determining that the MUD URL 1 is valid, so as to obtain the MUD file 1 based on the MUD URL 1; or if the MUD URL 1 and the trusted MUD URL 1' do not meet the matching rule, determining that the MUD URL 1 is invalid, and S104 is not performed. The MUD URL 1' may be specifically any MUD URL successfully verified by the MUD controller 30. For example, the MUD URL 1' may be the MUD URL 0 stored in a local certificate in the MUD controller 30.

It should be noted that the foregoing matching rule indicates a rule that a plurality of MUD URLs corresponding to a same terminal device should meet, and may be specifically customized based on a requirement of a manufacturer. When a to-be-verified MUD URL and a trusted MUD URL meet the matching rule, it is considered that the to-be-verified MUD URL is valid. For example, the matching rule may include any one or more of the following: a URL prefix matching rule, a URL suffix matching rule, a URL key information matching rule, or a URL pattern matching rule. The URL prefix matching rule is that a to-be-verified MUD URL and a trusted MUD URL have a same prefix. The URL suffix matching rule is that a to-be-verified MUD URL and a trusted MUD URL have a same suffix. The URL key information matching rule is that a to-be-verified MUD URL and a trusted MUD URL have same specific key information, for example, a domain name. The URL pattern matching rule is that a to-be-verified MUD URL and a trusted MUD URL have a same or similar segment of content. It should be noted that the trusted MUD URL that is in the matching rule and that matches the to-be-verified MUD URL may be specifically any MUD URL for which validity verification is performed previously and verification succeeds. In this embodiment of this application, the MUD URL 0 generated when the terminal device 11 is delivered from a factory is used as an example for description.

For the matching rule, in one case, to improve security of obtaining a MUD file, the matching rule may be content written by the manufacturer into the certificate of the terminal device 11 before the terminal device 11 is delivered from a factory. In this case, the MUD controller 30 may obtain the matching rule from the certificate. In another case, because the matching rule is not used when the terminal device 11 accesses a network for the first time, the matching rule may alternatively be carried in the MUD file 0 of the terminal device 11 at delivery. When obtaining the MUD file 0, the MUD controller 30 may obtain the matching rule from the MUD file 0 and store the matching rule. In still another case, the matching rule may alternatively be written by the manufacturer into the terminal device 11 and independent of the certificate before the terminal device 11 is delivered from a factory. In this case, the MUD controller 30 may receive and store the matching rule sent by the terminal device 11. For security, the matching rule may also carry a digital signature corresponding to the matching rule. In this way, the MUD controller 30 may store the matching rule after verifying the matching rule by using the digital signature. In still another case, the matching rule may alternatively be directly configured on the trusted MUD controller 30 by the manufacturer.

It should be noted that, when the terminal device 11 is updated, before S103, the terminal device 11 sends a request message to the MUD controller 30. The request message not only may carry the MUD URL 1, but also may carry a digital signature of the MUD URL 1 for higher security. Therefore, in S103, in addition to the foregoing validity verification, the MUD controller 30 may further verify the MUD URL 1 based on the digital signature, to determine that the MUD URL 1 has a valid source and is not tampered with. The MUD controller 30 may obtain the MUD file 1 based on the MUD URL 1 only after verification performed on the MUD URL 1 based on the digital signature and the foregoing validity verification succeed.

It should be noted that, a process of obtaining a MUD file by the MUD controller 30 based on a MUD URL may be specifically: The MUD controller 30 obtains the MUD file corresponding to the MUD URL from a location corresponding to the MUD URL on a MUD file server.

After obtaining the MUD file 1, the MUD controller 30 may convert the MUD file 1 into a network policy 1, and apply the network policy 1 to a network device 20, so that the network device 20 constrains a network behavior of the terminal device 11 according to the network policy 1.

S105: The terminal device 11 obtains a MUD URL 2, where the MUD URL 2 is used to obtain an updated MUD file 2 when the terminal device is updated.

When the terminal device 11 is updated, the terminal device 11 not only can obtain an updated function, application, or the like from the manufacturer or a third-party trusted platform, but also can obtain the MUD URL 2 corresponding to the updated terminal device from the manufacturer or the third-party trusted platform, to obtain the updated MUD file 2.

S106: The terminal device 11 sends a message 1 to the MUD controller 30, where the message 1 carries the MUD URL 2.

S107: The MUD controller 30 receives the message 1 sent by the terminal device, where the MUD URL 1 and the MUD URL 2 meet the matching rule.

S108: The MUD controller 30 obtains the MUD file 2 based on the MUD URL 2.

The MUD URL 2 is a MUD URL corresponding to the MUD file 2 generated during the current update of the terminal device 11. The MUD file 2 is a MUD file generated during the current update of the terminal device 11.

In some implementations, after obtaining the MUD URL 2, the terminal device 11 may verify, according to the matching rule, whether the MUD URL 2 and the MUD URL 0 in the certificate meet the matching rule. If the MUD URL 2 and the MUD URL 0 in the certificate meet the matching rule, the MUD URL 2 is sent to the MUD controller 30; otherwise, the MUD URL 2 is not sent to the MUD controller 30. In this implementation, if the MUD controller 30 receives the MUD URL 2 sent by the terminal device 11, the MUD URL 2 may be considered to be trusted, so as to obtain the MUD file 2 based on the MUD URL 2. It should be noted that, to improve security, the terminal device 11 may alternatively enable, by using another security guarantee, the MUD controller 30 to believe that a verification result of the terminal device 11 is trusted. For example, the terminal device 11 may generate log information for a process of verifying validity of the MUD URL 2 by the terminal device 11, and send both the log information and the MUD URL 2 to the MUD controller 30. Then, the MUD controller 30 determines, based on the log information, that the verification process of the terminal device 11 is valid, so as to determine that the MUD URL 2 is trusted, and obtains the MUD file 2 based on the MUD URL 2.

In some other implementations, the terminal device 11 sends the newly received MUD URL 2 to the MUD controller 30 without verifying validity of the MUD URL 2, and the MUD controller 30 verifies the validity of the MUD URL 2. In this implementation, between S107 and S108, the method may further include: The MUD controller 30 verifies the validity of the MUD URL 2. S108 may be specifically: The MUD controller 30 obtains the MUD file 2 based on the verified MUD URL 2.

In an example, if the message 1 that is sent by the terminal device 11 and that is received by the MUD controller 30 carries the MUD URL 2, the certificate of the terminal device 11, and the MUD URL 0, the MUD controller 30 may first verify the certificate, and when determining that the certificate is valid, determine that the MUD URL 0 in the certificate is also trusted. In this case, the MUD controller 30 may continue to verify whether the MUD URL 0 carried in the certificate is the same as the received MUD URL 0, to obtain a verification result 3; or may continue to verify the validity of the MUD URL 2, where this may be specifically: determining whether the MUD URL 2 and the trusted MUD URL 0 meet the matching rule, and obtaining a verification result 4. If both the verification result 3 and the verification result 4 indicate that verification succeeds, it is determined that the MUD URL 2 is valid, so as to obtain the MUD file 2 based on the MUD URL 2. If at least one of the verification result 3 and the verification result 4 indicates that verification fails, it is determined that the MUD URL 2 is invalid, and S108 is not performed. That the verification result 3 indicates that verification succeeds means that the MUD URL 0 carried in the certificate is the same as the received MUD URL 0. That the verification result 4 indicates that verification succeeds means that the MUD URL 2 is valid, for example, the MUD URL 2 and the trusted MUD URL 0 meet the matching rule.

In another example, if the message 1 that is sent by the terminal device 11 and that is received by the MUD controller 30 carries the MUD URL 2 and the certificate of the terminal device 11, the MUD controller 30 may first verify the certificate, and when determining that the certificate is valid, determine that the MUD URL 0 in the certificate is trusted. In this case, the validity of the MUD URL 2 may be further verified. This may be specifically: determining whether the MUD URL 2 and the trusted MUD URL 0 meet the matching rule; and if the MUD URL 2 and the trusted MUD URL 0 meet the matching rule, determining that the MUD URL 2 is valid, so as to obtain the MUD file 2 based on the MUD URL 2; or if the MUD URL 2 and the trusted MUD URL 0 do not meet the matching rule, determining that the MUD URL 2 is invalid, and S108 is not performed.

In still another example, if the message 1 carries only the MUD URL 2, and the MUD controller 30 previously determines, based on the certificate, that the specific MUD URL 1' is trusted, and locally stores the MUD URL 1' in the MUD controller 30, validity verification may be performed on the newly received MUD URL 2 by using the MUD URL 1'. This may be specifically: determining whether the MUD URL 2 and the trusted MUD URL 1' meet the matching rule; and if the MUD URL 2 and the trusted MUD URL 1' meet the matching rule, determining that the MUD URL 2 is valid, so as to obtain the MUD file 2 based on the MUD URL 2; or if the MUD URL 2 and the trusted MUD URL 1' do not meet the matching rule, determining that the MUD URL 1 is invalid, and S 104 is not performed. The MUD URL 1' may be specifically any MUD URL successfully verified by the MUD controller 30. For example, the MUD URL 1' may be the MUD URL 0 stored in a local certificate in the MUD controller 30. For another example, the MUD URL 1' may alternatively be the MUD URL 1 successfully verified in S104.

It should be noted that, for higher security, the message 1 sent by the terminal device 11 to the MUD controller 30 may further carry a digital signature of the MUD URL 2. Therefore, between S107 and S108, in addition to the foregoing validity verification, the MUD controller 30 may further verify the MUD URL 2 based on the digital signature, to determine that the MUD URL 2 has a valid source and is not tampered with. The MUD controller 30 may obtain the MUD file 2 based on the MUD URL 2 only after verification performed on the MUD URL 2 based on the digital signature and the foregoing validity verification succeed. The digital signature is obtained by signing the MUD URL 2 by using a private key of the manufacturer of the terminal device 11. Therefore, verifying the MUD URL 2 based on the digital signature may be specifically: in the issuer information carried in the certificate of the terminal device 11, finding, through query, the related information about the upper-level certificate that performs digital signature on the certificate, so that the upper-level certificate is found by using the related information about the upper-level certificate, and the digital signature of the certificate of the terminal device 11 is verified based on the public key in the public key information of the upper-level certificate.

After obtaining the MUD file 2, the MUD controller 30 may convert the MUD file 2 into a network policy 2, and apply the network policy 2 to a network device 20, so that the network device 20 constrains a network behavior of the terminal device 11 according to the network policy 2.

It should be noted that for related descriptions of the matching rule, refer to the related descriptions of the matching rule in S103 and S104. Details are not described herein again.

For example, when the terminal device 11 is delivered from a factory, the MUD URL 0 corresponding to the generated MUD file 0 is "https://www.huawei.com/mud/router/firmware_version_1234/os_version_4321.json", the matching rule is a URL prefix matching rule, and a matching URL prefix is "https://www.huawei.com/mud/router/". The certificate is issued to the terminal device 11 before the terminal device 11 is delivered from a factory, and the certificate carries "https://www.huawei.com/mud/router/firmware_version_1234/os_version_4321.json" and the matching rule.

When accessing a network for the first time, the terminal device 11 sends the certificate to the MUD controller 30. After verifying the certificate successfully, the MUD controller 30 obtains the MUD URL 0 "https://www.huawei.com/mud/router/firmware_version_1234/os_version_4321.json" from the certificate, so as to obtain the MUD file 0 from the MUD file server based on "https://www.huawei.com/mud/router/firmware_version_1234/os_version_4321.json".

When a firmware version number of the terminal device 11 is updated from 1234 to 1244, and a system version number is updated from 4321 to 4421, the MUD controller 30 receives the MUD URL 1 "https://www.huawei.com/mud/router/firmware_version_1244/os_version_4421.json" sent by the terminal device 11, verifies that the MUD URL 1 and the MUD URL 0 meet the matching rule, in other words, both include a URL prefix "https://www.huawei.com/mud/router/", and determines that the MUD URL 1 is valid, so as to obtain the MUD file 1 from the MUD file server based on "https://www.huawei.com/mud/router/firmware-version₋1244/os-version 4421.json".

It can be learnt that, according to the method 100, the MUD controller 30 can use, as a trusted basis, a MUD URL that is verified to be valid before a current update. When the terminal device 11 is currently updated, the terminal device 11 sends a new to-be-verified MUD URL to the MUD controller 30. If the to-be-verified MUD URL and the trusted MUD URL meet a matching condition, it represents that the to-be-verified MUD URL is valid. Therefore, the MUD controller 30 may obtain a new MUD file based on the MUD URL whose validity verification succeeds. In this way, a function of securely, effectively, and flexibly obtaining a MUD file in a terminal device 11 update scenario is implemented.

With reference to FIG. 3, the following uses the network 100 shown in FIG. 1 as an example, and specifically uses the terminal device 11 in the network 100 as an example to briefly describe a MUD file obtaining method 200 according to an embodiment of this application. The method 200 corresponds to the foregoing second possible implementation.

FIG. 3 shows the MUD file obtaining method 200 according to the embodiment of this application. For example, the method 200 may include the following S201 to S209.

S201: The terminal device 11 sends a message 2 to a MUD controller 30, where the message 2 carries a certificate and MUD URL information 1, the MUD URL information 1 indicates variable attribute information of a MUD URL 0, the certificate carries MUD URL information 2, the MUD URL information 2 indicates fixed attribute information of the MUD URL 0, and the MUD URL 0 is used to obtain a MUD file 0 configured when the terminal device 11 is delivered from a factory.

It should be noted that, in an example, the message 2 may be an 802.1X request message, and the request message carries the certificate and the MUD URL information 1. In another example, the message 2 may alternatively be a DHCP request message or an LLDP request message, and the request message may carry the certificate and the MUD URL information 1 by extending an OPTION field or a TLV field. In still another example, a manufacturer may alternatively store, on a network, the certificate issued for the terminal device 11, and store, in the terminal device 11, both the certificate and a certificate URL that identifies a location at which the certificate is stored on the network. In this case, to reduce a length of the message 2 occupied by the certificate when S202 is performed, the certificate URL and the MUD URL information 1 may be carried in the message 2. The MUD controller 30 may alternatively obtain, based on the certificate URL, the certificate corresponding to the certificate URL from the network.

For specific descriptions of the certificate, refer to the descriptions of the certificate in the method 100. A difference is that in the method 200, the certificate carries fixed attribute information indicates each MUD URL corresponding to the terminal device 11. Specifically, the MUD URL information 2 may be specifically carried in an extension field of the certificate. For example, a field 3 may be extended in the extension field of the certificate, and a value of a field in the field 3 indicates the MUD URL information 2 of the terminal device 11 at delivery.

The fixed attribute information indicates a same part in a plurality of MUD URLs of the terminal device 11. For example, regardless of how the terminal device 11 is updated or how many times the terminal device 11 is updated, the MUD URL information 2 of the terminal device 11 is a fixed part in the plurality of MUD URLs corresponding to the terminal device 11. In an example, the fixed attribute information may be a part of the MUD URL 0. For example, the MUD URL information 2 may be a fixed URL prefix in the MUD URL 0: "https://www.huawei.com/mud/router/". For another example, the MUD URL information 2 may alternatively be a fixed URL suffix in the MUD URL 0. For still another example, the MUD URL information 2 may alternatively be fixed URL key information in the MUD URL 0. In another example, the fixed attribute information may include fixed information 1 of the terminal device 11 and a composition rule of the fixed information 1 in a MUD URL. For example, the fixed attribute information corresponding to the MUD URL information 2 may include the fixed information 1 (for example, a value huawei of a terminal device 11 vendor field VENDOR and a value router of a device type field DEVICETYPE) and the composition rule (for example, https://www.VENDOR.com/mud/DEVICETYPE/) of the fixed information 1 in the MUD URL Therefore, based on the fixed information 1 and the composition rule of the fixed information 1 in the MUD URL 0, the MUD URL information 2 may be determined to be "https://www.huawei.com/mud/router/".

It should be noted that the fixed attribute information (namely, the MUD URL information 2) is written into a certificate issued when a terminal device is delivered from a factory. When the certificate is verified, it may be determined that the MUD URL information 2 is valid and not tampered with, and it is also determined that the MUD URL information 2 is from the terminal device 11, so that the fixed attribute information can be used as a trusted basis for a generated MUD URL

Variable attribute information indicates different parts of the plurality of MUD URLs of the terminal device 11, that is, each time the terminal device 11 is updated, the variable attribute information of the terminal device 11 changes. In an example, the variable attribute information may be a part of the MUD URL 0. For example, the MUD URL information 1 may be a variable URL suffix in a MUD URL 1: "firmware_version_1234/os_version_4321.json". For another example, the MUD URL information 1 may alternatively be a variable URL prefix in the MUD URL 0. For still another example, the MUD URL information 1 may alternatively be variable URL key information in the MUD URL 0. In another example, the variable attribute information may include variable information 2 of the terminal device 11 and a composition rule of the variable information 2 in a MUD URL. For example, the variable attribute information corresponding to the MUD URL information 1 may include the variable information 2 (for example, a value 1234 of a terminal device 11 firmware version number field FIRMWARE and a value 4321 of a system version number field OS) and the composition rule (for example, FIRMWARE/OS.json) of the variable information 2 in the MUD URL. Therefore, based on the variable information 2 and the composition rule of the variable information 2 in the MUD URL 0, the MUD URL information 1 may be determined to be "firmware_version_1234/os_version_4321.json".

It should be noted that, the variable attribute information is not written into the certificate of the terminal device 11 at delivery, so that it can be ensured that the variable attribute information flexibly changes when the terminal device 11 is updated. In this way, it is possible to flexibly and securely obtain a MUD file in a scenario in which the terminal device 11 is updated.

For higher security, the message 2 may further include a digital signature of the MUD URL information 1.

S202: The MUD controller 30 verifies the certificate.

After receiving the message 2, the MUD controller 30 may verify the certificate in the message 2. When the certificate is determined to be valid, it represents that content in the certificate is also valid. In other words, validity verification on the MUD URL information 2 is completed, and the MUD URL information 2 is determined to be valid. Therefore, the MUD controller 30 obtains the trusted MUD URL information 2 from the certificate.

In some implementations, the message 2 further includes the digital signature of the MUD URL information 1. Therefore, between S201 and S203, the MUD controller 30 may further use the digital signature to verify the MUD URL information 1. If verification succeeds, it can be determined that the MUD URL information 1 has a valid source and is not tampered with. In specific implementation, the digital signature is obtained by signing the MUD URL information 1 by using a private key of the manufacturer of the terminal device 11. Verifying the MUD URL information 1 based on the digital signature may be specifically: verifying the digital signature based on a public key carried in the certificate of the manufacturer. If verification succeeds, it represents that the MUD URL information 1 is valid. The certificate of the manufacturer may be specifically included by the terminal device 11 in the message 2 and sent to the MUD controller 30, may be obtained from a network and stored by the MUD controller 30, or may be directly configured by the manufacturer on the MDU controller 30.

In some other implementations, the message 2 further includes the MUD URL information 2. In this case, after verification on the certificate in S202 succeeds, the MUD controller 30 may further verify whether the received MUD URL information 2 is the same as the MUD URL information 2 in the certificate. If the received MUD URL information 2 is the same as the MUD URL information 2 in the certificate, it is determined that verification on the MUD URL information 2 succeeds.

According to S202, the MUD controller 30 may complete verification on content sent by the terminal device 11. When all verifications succeed, S203 and S204 are performed. Once at least one verification fails, S203 and S204 are not performed.

S203: The MUD controller 30 obtains the MUD URL 0 based on the MUD URL information 2 and the MUD URL information 1.

In an example, the manufacturer, the terminal device 11, and the MUD controller 30 may agree on a default combination manner. When the MUD controller 30 obtains valid MUD URL information 2 and valid MUD URL information 1, the MUD URL 0 may be obtained based on the default combination manner. The default combination manner may be a simple splicing combination manner, for example, the MUD URL 0 is specifically: "MUD URL information 2+MUD URL information 1" or "MUD URL information 1+MUD URL information 2".

In another example, S203 may be specifically: the MUD controller 30 obtains, according to a preset rule, the MUD URL 0 based on the MUD URL information 2 and the MUD URL information 1.

The preset rule may specifically refer to a combination rule that is between fixed attribute information and variable attribute information and that is defined by a manufacturer based on a requirement and a feature of a MUD URL. The preset rule may be specifically a combination rule described by a text description, or may be a combination rule described by a formula, for example, a regular expression. Any rule that can clearly describe how to generate content of a corresponding complete MUD URL based on the fixed attribute information and the variable attribute information may be used as the preset rule.

For the preset rule, in one case, to improve security of obtaining a MUD file, the preset rule may be content written by the manufacturer into the certificate of the terminal device 11 before the terminal device 11 is delivered from a factory. For example, a field 4 may be extended in the extension field of the certificate, and a value of a field in the field 4 indicates the preset rule corresponding to the terminal device 11. In this case, the MUD controller 30 may obtain the preset rule from the certificate. In another case, the preset rule may alternatively be written by the manufacturer into the terminal device 11 and independent of the certificate before the terminal device 11 is delivered from a factory. In this case, the MUD controller 30 may receive and store the preset rule sent by the terminal device 11. For security, the preset rule may also carry a digital signature corresponding to the preset rule. In this way, the MUD controller 30 may store the preset rule after verifying the preset rule by using the digital signature. In still another case, the preset rule may alternatively be directly configured on the trusted MUD controller 30 by the manufacturer.

S204: The MUD controller 30 obtains the MUD file 0 based on the MUD URL 0.

In specific implementation, a process of obtaining the MUD file 0 by the MUD controller 30 based on the MUD URL 0 may be specifically: The MUD controller 30 obtains the MUD file 0 corresponding to the MUD URL 0 from a location corresponding to the MUD URL 0 on the MUD file server.

S205: The terminal device 11 obtains MUD URL information 3, where the MUD URL information 3 indicates variable attribute information of the MUD URL 1, and the MUD URL 1 is used to obtain an updated MUD file 1 when the terminal device 11 is updated.

When the terminal device 11 is updated, the terminal device 11 not only can obtain an updated function, application, or the like from the manufacturer or a third-party trusted platform, but also can obtain the MUD URL information 3 corresponding to the updated terminal device from the manufacturer or the third-party trusted platform, to obtain the updated MUD file 1.

S206: The terminal device 11 sends a message 3 to the MUD controller 30, where the message 3 carries the MUD URL information 3.

S207: The MUD controller 30 obtains the MUD URL information 2 of the terminal device 11.

S208: The MUD controller 30 obtains the MUD URL 1 based on the MUD URL information 2 and the MUD URL information 3.

S209: The MUD controller 30 obtains the MUD file 1 based on the MUD URL 1.

The message 3 may be an 802.1X request message, and the request message carries the MUD URL information 3. The message 2 may alternatively be a DHCP request message or an LLDP request message, and the request message may carry the MUD URL information 3 by extending an OPTION field or a TLV field.

In specific implementation, after receiving the message 3, the MUD controller 30 may obtain the MUD URL information 3 from the message 3, and obtain the MUD URL 1 based on the MUD URL information 3 and the locally stored MUD URL information 2, so as to obtain the MUD file 1 based on the MUD URL 1.

In some implementations, for higher security, the message 3 may further include a digital signature of the MUD URL information 3. Therefore, after S206 and before S208, the MUD controller 30 may further use the digital signature to verify validity of the MUD URL information 3. If verification succeeds, it can be determined that the MUD URL information 3 has a valid source and is not tampered with. In this way, the MUD URL 1 is obtained based on the MUD URL information 3 and the locally stored MUD URL information 2, and the MUD file 1 is obtained based on the MUD URL 1. The digital signature of the MUD URL information 3 is obtained by signing the MUD URL information 3 by using the private key of the manufacturer of the terminal device 11. Therefore, verifying the MUD URL information 1 based on the digital signature may be specifically: verifying the digital signature based on the public key carried in the certificate of the manufacturer. If verification succeeds, it represents that the MUD URL information 3 is valid. The certificate of the manufacturer may be specifically included by the terminal device 11 in the message 2 and sent to the MUD controller 30, may be obtained from a network and stored by the MUD controller 30, or may be directly configured by the manufacturer on the MDU controller 30.

In some other implementations, the message 3 further includes the MUD URL information 2. In this case, after S206 and before S208, whether the received MUD URL information 2 is the same as the locally stored MUD URL information 2 further needs to be verified. If the received MUD URL information 2 is the same as the locally stored MUD URL information 2, it is determined that verification on the MUD URL information 2 succeeds. Therefore, the MUD URL 1 is obtained based on the MUD URL information 3 and the locally stored MUD URL information 2, and the MUD file 1 is obtained based on the MUD URL 1.

In some still other implementations, the message 3 further includes the certificate. Therefore, after S206 and before S208, the certificate further needs to be verified. After verification succeeds, the MUD URL information 2 is obtained from the certificate. Whether the MUD URL information 2 in the certificate is the same as the locally stored MUD URL information 2 is verified. If the MUD URL information 2 in the certificate is the same as the locally stored MUD URL information 2, it is determined that verification on the MUD URL information 2 succeeds. Therefore, the MUD URL 1 is obtained based on the MUD URL information 3 and the locally stored MUD URL information 2, and the MUD file 1 is obtained based on the MUD URL 1.

In some other implementations, the message 3 further includes the certificate and the MUD URL information 2. Therefore, after S206 and before S208, the certificate further needs to be verified. After verification succeeds, the MUD URL information 2 is obtained from the certificate. Whether the received MUD URL information 2, the MUD URL information 2 in the certificate, and the locally stored MUD URL information 2 are the same is verified. If the received MUD URL information 2, the MUD URL information 2 in the certificate, and the locally stored MUD URL information 2 are the same, it is determined that verification on the MUD URL information 2 succeeds. Therefore, the MUD URL 1 is obtained based on the MUD URL information 3 and the locally stored MUD URL information 2, and the MUD file 1 is obtained based on the MUD URL 1.

The MUD controller 30 verifies all content in the message 3. When all verifications succeed, S208 and S209 are performed. Once at least one verification fails, S208 and S209 are not performed.

For example, when the terminal device 11 is delivered from a factory, the MUD URL 0 corresponding to the generated MUD file 0 is "https://www.huawei.com/mud/router/firmware_version_1234/os_version_4321.json", and according to the method 200, it is determined that the MUD URL information 2 indicating the fixed attribute information of the MUD URL 0 is "https://www.huawei.com/mud/router/", and the MUD URL information 1 indicating the fixed attribute information of the MUD URL 0 is "firmware_version_1234/os_version_4321.json". The certificate is issued to the terminal device 11 before the terminal device 11 is delivered from a factory. The certificate carries "https://www.huawei.com/mud/router/", and "firmware_version_1234/os_version_4321.json" is also written into the terminal device 11.

When accessing a network for the first time, the terminal device 11 sends both the certificate and "firmware_version_1234/os_version_4321.json" to the MUD controller 30. After verifying the certificate successfully, the MUD controller 30 obtains "https://www.huawei.com/mud/router/" from the certificate, and obtains the MUD URL 0 "https://www.huawei.com/mud/router/firmware_version_1234/os_version_4321.json" based on "https://www.huawei.com/mud/router/" and "firmware_version_1234/os_version_4321.json", so as to obtain the MUD file 0 from the MUD file server based on "https://www.huawei.com/mud/router/firmware_version_1234/os_version_4321.json".

When a firmware version number of the terminal device 11 is updated from 1234 to 1244, and a system version number is updated from 4321 to 4421, because the MUD controller 30 stores the MUD URL information 2, the terminal device 11 sends the updated MUD URL information 3 "firmware_version_1244/os_version_4421.json" to the MUD controller 30. The MUD controller 30 obtains the MUD URL 1 "https://www.huawei.com/mud/router/firmware_version_1244/os_version_4421.json" based on locally stored "https://www.huawei.com/mud/router/" and received " firmware_version_1244/os_version_4421.json", therefore, the MUD file 1 may be obtained from the MUD file server based on "https://www.huawei.com/mud/router/firmware-version₋1244/os-version 4421.json".

It should be noted that only one update of the terminal device 11 is used as an example for description in this embodiment of this application. Subsequent updates of the terminal device 11 all may be implemented with reference to the update process. Details are not described herein again.

It can be learnt that, according to the method 200 provided in this embodiment of this application, fixed attribute information in a verified valid MUD URL is used as a trusted basis, and the MUD controller 30 obtains a MUD URL of an updated terminal device based on the trusted fixed attribute information and newly received variable attribute information, by using a feature that fixed attribute information of MUD URLs of a same terminal device remains unchanged, determines that the obtained MUD URL is valid, and obtains a corresponding MUD file based on the valid MUD URL. This is applicable to a scenario in which a terminal device is updated, so that it is possible to flexibly, securely, and effectively obtain a MUD file.

It should be noted that, in the method 200, S205 to S209 may completely describe a manner in which the MUD controller 30 obtains a MUD file according to the method 200. Before S205, the terminal device 11 may send the certificate to the MUD controller 30, and obtain the MUD URL 0 based on the certificate, so as to obtain the MUD file 0 based on the MUD URL 0. S201 to S204 describe only an optional implementation in which the terminal device 11 obtains the MUD URL 0 based on the certificate. S301 to S304 in the following method 300 further describe another optional implementation in which the terminal device 11 obtains the MUD URL 0 based on the certificate according to the method 200.

It should be noted that the foregoing S201 to S204 and the following S301 to S304 may be used to obtain a corresponding MUD file 0 when the terminal device 11 accesses a network for the first time, and S205 to S209 and S305 to S309 may be used to obtain a corresponding MUD file in any update process after the terminal device 11 accesses the network for the first time.

With reference to FIG. 4, the following uses the network 100 shown in FIG. 1 as an example, and specifically uses the terminal device 11 in the network 100 as an example to briefly describe a MUD file obtaining method 300 according to an embodiment of this application. The method 300 corresponds to the foregoing second possible implementation.

FIG. 4 shows the MUD file obtaining method 300 according to the embodiment of this application. For example, the method 300 may include the following S301 to S309.

S301: The terminal device 11 stores a certificate.

S302: The terminal device 11 sends the certificate to a MUD controller 30.

S303: The MUD controller 30 verifies validity of a MUD URL 0 based on the certificate sent by the terminal device 11.

S304: The MUD controller 30 obtains a MUD file 0 based on the verified MUD URL 0.

It should be noted that, for specific implementations of S301 to S304, refer to related descriptions of S101 to S104 in the method 100 when the terminal device 11 accesses the network for the first time. Details are not described herein again.

In some possible implementations, the MUD file 0 may carry fixed attribute information, namely, MUD URL information 2, that indicates a same part of the MUD URL 0 and a MUD URL 1. In addition, the MUD file 0 may further carry a corresponding preset rule based on a requirement.

S305: The terminal device 11 obtains MUD URL information 3, where the MUD URL information 3 indicates variable attribute information of the MUD URL 1, and the MUD URL 1 is used to obtain an updated MUD file 1 when the terminal device 11 is updated.

S306: The terminal device 11 sends a message 4 to the MUD controller 30, where the message 4 carries the MUD URL information 3.

S307: The MUD controller 30 obtains the MUD URL information 2 of the terminal device 11.

S308: The MUD controller 30 obtains the MUD URL 1 based on the MUD URL information 2 and the MUD URL information 3.

S309: The MUD controller 30 obtains the MUD file 1 based on the MUD URL 1.

It should be noted that, for specific implementations of S305 to S309, refer to related descriptions of S205 to S209 in the method 200. Details are not described herein again.

For example, when the terminal device 11 is delivered from a factory, the MUD URL 0 corresponding to the generated MUD file 0 is "https://www.huawei.com/mud/router/firmware_version_1234/os_version_4321.json", the matching rule is a URL prefix matching rule, and a matching URL prefix is "https://www.huawei.com/mud/router/". The certificate is issued to the terminal device 11 before the terminal device 11 is delivered from a factory, and the certificate carries "https://www.huawei.com/mud/router/firmware_version_1234/os_version_4321.json" and the matching rule.

When accessing a network for the first time, the terminal device 11 sends the certificate to the MUD controller 30. After verifying the certificate successfully, the MUD controller 30 obtains the MUD URL 0 "https://www.huawei.com/mud/router/firmware_version_1234/os_version_4321.json" from the certificate, so as to obtain the MUD file 0 from the MUD file server based on "https://www.huawei.com/mud/router/firmware_version_1234/os_version_4321.json". The MUD file 0 carries the MUD URL information 2 "https://www.huawei.com/mud/router/".

When a firmware version number of the terminal device 11 is updated from 1234 to 1244, and a system version number is updated from 4321 to 4421, the MUD controller 30 receives the MUD URL 1 "https://www.huawei.com/mud/router/firmware_version_1244/os_version_4421.json" sent by the terminal device 11, verifies that the MUD URL 1 and the MUD URL 0 meet the matching rule, in other words, both include a URL prefix "https://www.huawei.com/mud/router/", and determines that the MUD URL 1 is valid, so as to obtain the MUD file 1 from the MUD file server based on "https://www.huawei.com/mud/router/firmware-version₋1244/os-version 4421.json".

When the firmware version number of the terminal device 11 is updated from 1234 to 1244, and the system version number is updated from 4321 to 4421, because the MUD controller 30 stores the MUD URL information 2, the terminal device 11 sends the updated MUD URL information 3 "firmware_version_1244/os_version_4421.json" to the MUD controller 30. The MUD controller 30 obtains the MUD URL 1 "https://www.huawei.com/mud/router/firmware_version_1244/os_version_4421.json" based on locally stored "https://www.huawei.com/mud/router/" and received " firmware_version_1244/os_version_4421.json", therefore, the MUD file 1 may be obtained from the MUD file server based on "https://www.huawei.com/mud/router/firmware-version₋1244/os-version 4421.json".

It can be learnt that, according to the method 300, when the terminal device accesses a network for the first time, the MUD controller 30 can obtain a MUD file based on a complete MUD URL. When the terminal device 11 is updated, fixed attribute information in a MUD URL is used as a trusted basis, and the MUD controller 30 obtains a MUD URL of the updated terminal device based on the trusted fixed attribute information and newly received variable attribute information, by using a feature that fixed attribute information of MUD URLs of a same terminal device remains unchanged, determines that the obtained MUD URL is valid, and obtains a corresponding MUD file based on the valid MUD URL. This is applicable to a scenario in which a terminal device is updated, so that it is possible to flexibly, securely, and effectively obtain a MUD file.

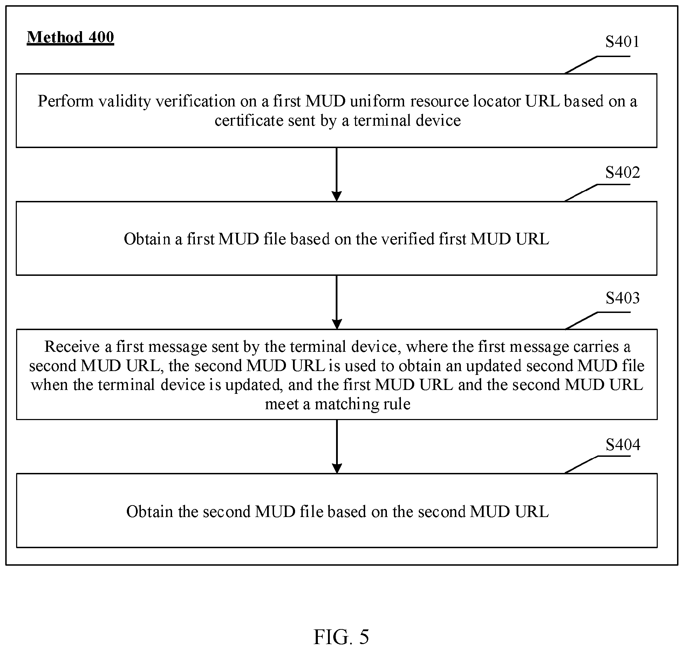

FIG. 5 is a schematic flowchart of a manufacturer usage description MUD obtaining method 400 according to an embodiment of this application. The method 400 is implemented by a MUD controller. For example, the MUD obtaining method 400 may include the following steps.

S401: Validity verification is performed on a first MUD uniform resource locator URL based on a certificate sent by a terminal device.

S402: A first MUD file is obtained based on the verified first MUD URL.

S403: A first message sent by the terminal device is received, where the first message carries a second MUD URL, the second MUD URL is used to obtain an updated second MUD file when the terminal device is updated, and the first MUD URL and the second MUD URL meet a matching rule.

S404: The second MUD file is obtained based on the second MUD URL

The MUD controller in the method 400 may be specifically the MUD controller 30 in the foregoing embodiments. For specific operations performed by the MUD controller, refer to the operations performed by the MUD controller 30 in the method 100. Specifically, for related descriptions of S401 and S402, refer to S103 and S 104 in the method 100. For related descriptions of S403 and S404, refer to S 106 to S 108 in the method 100. The first MUD URL may be the MUD URL 0 in the method 100, and in this case, the first MUD file is the MUD file 0 in the method 100. Alternatively, the first MUD URL may be the MUD URL 1 in the method 100, and in this case, the first MUD file is the MUD file 1 in the method 100. The first message may be the message 1 in the method 100. The second MUD URL is the MUD URL 2 in the method 100. The second MUD file is the MUD file 2 in the method 100.

In an example, the first message further carries a digital signature of the second MUD URL. The method 400 may further include: The MUD controller verifies the second MUD URL based on the digital signature. For example, that the MUD controller verifies the second MUD URL based on the digital signature is specifically: verifying the digital signature based on a public key carried in a manufacturer certificate. The public key carried in the certificate is paired with a private key of the terminal device, and is used to determine a correspondence between the certificate and the terminal device. Digital signature on the second MUD URL may be performed by a private key of a manufacturer. The private key matches a public key of the manufacturer. The public key of the manufacturer is carried in the manufacturer certificate, and the manufacturer certificate may be found by using issuer information carried in the certificate of the terminal device. In other words, the MUD controller may view issuer information carried in the certificate of the terminal device, search for a corresponding manufacturer certificate based on the issuer information, read the public key of the manufacturer from the manufacturer certificate, and verify the digital signature by using the public key of the manufacturer. In this way, by performing digital signature and verification on the second MUD URL, it can be ensured that the second MUD URL used to obtain the second MUD file is a trusted MUD URL that has a valid source and that is not tampered with.

In a possible implementation, the terminal device performs matching verification on the first MUD URL and the second MUD URL, and sends the verified second MUD URL to the MUD controller.

In a possible implementation, the method further includes: The MUD controller performs matching verification on the first MUD URL and the second MUD URL, and obtains the second MUD file based on the verified second MUD URL

In some possible implementations, the first message may further carry the first MUD URL, so that the MUD controller performs more verification based on the first message, to ensure that a MUD file is obtained more securely. In an example, the first message may directly carry the first MUD URL. In this case, the method 400 may further include: The MUD controller obtains the first MUD URL from the first message, and verifies whether the second MUD URL and the first MUD URL meet the matching rule, and if the second MUD URL and the first MUD URL meet the matching rule, S404 is performed. In another example, the first message may alternatively carry the certificate of the terminal device, and the certificate carries the first MUD URL. In this case, the method 400 may further include: The MUD controller obtains the certificate from the first message, obtains the first MUD URL from the certificate, and verifies whether the second MUD URL and the first MUD URL carried in the certificate meet the matching rule, and if the second MUD URL and the first MUD URL meet the matching rule, S404 is performed. In still another example, to reduce space occupied by certificate transfer in the first message, when issuing the certificate, the manufacturer also stores the certificate in a network. In this way, the first message may alternatively carry a URL of the certificate, and the URL of the certificate indicates a location of the certificate in the network. In this case, the method 400 may further include: The MUD controller obtains the URL of the certificate from the first message, obtains the certificate based on the URL of the certificate, obtains the first MUD URL from the certificate, and verifies whether the second MUD URL and the first MUD URL carried in the certificate meet the matching rule, and if the second MUD URL and the first MUD URL meet the matching rule, S404 is performed. In yet another example, the first message may alternatively carry both the certificate and the first MUD URL. In this case, the method 400 may further include: The MUD controller verifies whether the first MUD URL carried in the first message is the same as the first MUD URL carried in the certificate, and if the first MUD URL carried in the first message is the same as the first MUD URL carried in the certificate, S404 is performed. It can be learnt that, the first message carries the verified first MUD URL, so that it can be ensured that the second MUD URL used to obtain the second MUD file matches the first MUD URL, in other words, the second MUD URL is a valid MUD URL released by the manufacturer of the terminal device.

In other possible implementations, the matching rule may be locally stored in the terminal device. In this case, the terminal device may directly send the matching rule to the MUD controller. Alternatively, for higher security, the matching rule may be stored in the certificate or the first MUD file. In this case, the MUD controller can obtain the matching rule from the certificate or obtain the matching rule from the first MUD file. Alternatively, the matching rule may be directly configured in the MUD controller, by the manufacturer or a third-party trusted platform. In this case, the MUD controller may directly store the matching rule locally.

The matching rule includes any one of the following: a URL prefix matching rule, a URL suffix matching rule, a URL key information matching rule, or a URL pattern matching rule. The URL prefix matching rule is that a to-be-verified MUD URL and a trusted MUD URL have a same prefix. The URL suffix matching rule is that a to-be-verified MUD URL and a trusted MUD URL have a same suffix. The URL key information matching rule is that a to-be-verified MUD URL and a trusted MUD URL have same specific key information, for example, a domain name. The URL pattern matching rule is that a to-be-verified MUD URL and a trusted MUD URL have a same or similar segment of content. It should be noted that the trusted MUD URL that is in the matching rule and that matches the to-be-verified MUD URL may be specifically any MUD URL for which validity verification is performed previously and the verification succeeds, for example, a MUD URL generated when the terminal device is delivered from a factory.

It should be noted that, according to the method 400 in this embodiment of this application, for a specific implementation and an achieved effect, refer to related descriptions in the embodiment shown in FIG. 2.

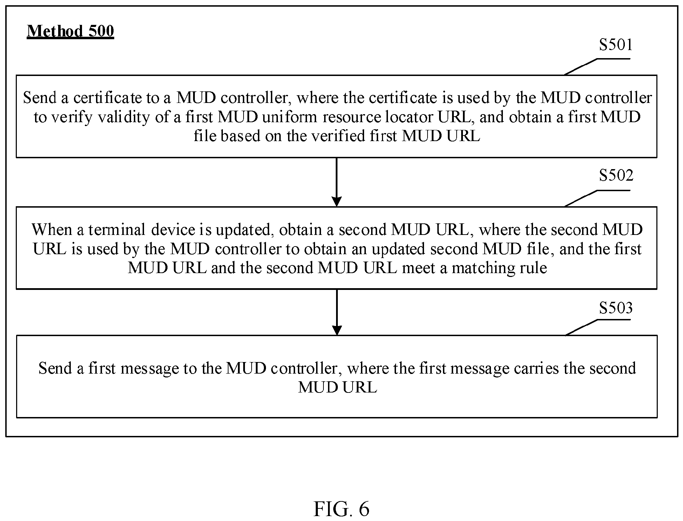

FIG. 6 is a schematic flowchart of a manufacturer usage description MUD obtaining method 500 according to an embodiment of this application. The method 500 is implemented by a terminal device. For example, the MUD obtaining method 500 may include the following steps.

S501: A certificate is sent to a MUD controller, where the certificate is used by the MUD controller to verify validity of a first MUD uniform resource locator URL, and obtain a first MUD file based on the verified first MUD URL

S502: When the terminal device is updated, a second MUD URL is obtained, where the second MUD URL is used by the MUD controller to obtain an updated second MUD file, and the first MUD URL and the second MUD URL meet a matching rule.

S503: A first message is sent to the MUD controller, where the first message carries the second MUD URL

The terminal device in the method 500 may be specifically the terminal device 11 in the foregoing embodiments. For specific operations performed by the terminal device, refer to the operations performed by the terminal device 11 in the method 100. Specifically, for related descriptions of S501, refer to S10 in the method 100. For related descriptions of S502 and S503, refer to S105 and S106 in the method 100. The first MUD URL may be the MUD URL 0 in the method 100, and in this case, the first MUD file is the MUD file 0 in the method 100. Alternatively, the first MUD URL may be the MUD URL 1 in the method 100, and in this case, the first MUD file is the MUD file 1 in the method 100. The first message may be the message 1 in the method 100. The second MUD URL is the MUD URL 2 in the method 100. It should be noted that the second MUD URL is used by the MUD controller to obtain the second MUD file. In this case, the second MUD file is the MUD file 2 in the method 100.

In an example, for higher security, the first message further carries a digital signature of the second MUD URL. The digital signature is obtained by performing digital signature by a manufacturer corresponding to the terminal device on the second MUD URL by using a private key of the manufacturer, where a public key carried in a manufacturer certificate of the manufacturer and the private key of the manufacturer are paired, and the public key carried in the manufacturer certificate is used to verify the digital signature.

In some possible implementations, the method 500 may further include: The terminal device verifies that the second MUD URL and the first MUD URL meet the matching rule.

In other possible implementations, the MUD controller verifies whether the second MUD URL and the first MUD URL meet the matching rule. In an example, the first message may alternatively carry the first MUD URL, and the first MUD URL is used by the MUD controller to verify that the first MUD URL and the second MUD URL meet the matching rule. In another example, the first message may alternatively carry the certificate, the certificate carries the first MUD URL, and the first MUD URL in the certificate is used by the MUD controller to verify that the first MUD URL and the second MUD URL meet the matching rule. In still another example, the first message alternatively carries a URL of the certificate, the URL of the certificate is used by the MUD controller to obtain the certificate, the certificate carries the first MUD URL, and the first MUD URL in the certificate is used by the MUD controller to verify that the first MUD URL and the second MUD URL meet the matching rule. In still another example, the first message may alternatively carry both the certificate (or the URL of the certificate) and the first MUD URL. In this case, the first MUD URL is used by the MUD controller to verify that the first MUD URL in the first message is the same as the first MUD URL carried in the certificate. It can be learnt that, the first message carries the verified first MUD URL, so that it can be ensured that the second MUD URL used to obtain the second MUD file matches the first MUD URL, in other words, the second MUD URL is a valid MUD URL released by the manufacturer of the terminal device.

In other possible implementations, the matching rule may be locally stored in the terminal device. In this case, the terminal device may directly send the matching rule to the MUD controller. Alternatively, for higher security, the matching rule may be stored in the certificate or the first MUD file. In this case, the MUD controller can obtain the matching rule from the certificate or obtain the matching rule from the first MUD file. Alternatively, the matching rule may be directly configured in the MUD controller, by the manufacturer or a third-party trusted platform. In this case, the MUD controller may directly store the matching rule locally.

The matching rule includes any one of the following: a URL prefix matching rule, a URL suffix matching rule, a URL key information matching rule, or a URL pattern matching rule.

It should be noted that, according to the method 500 in this embodiment of this application, for a specific implementation and an achieved effect, refer to related descriptions in the embodiment shown in FIG. 2.

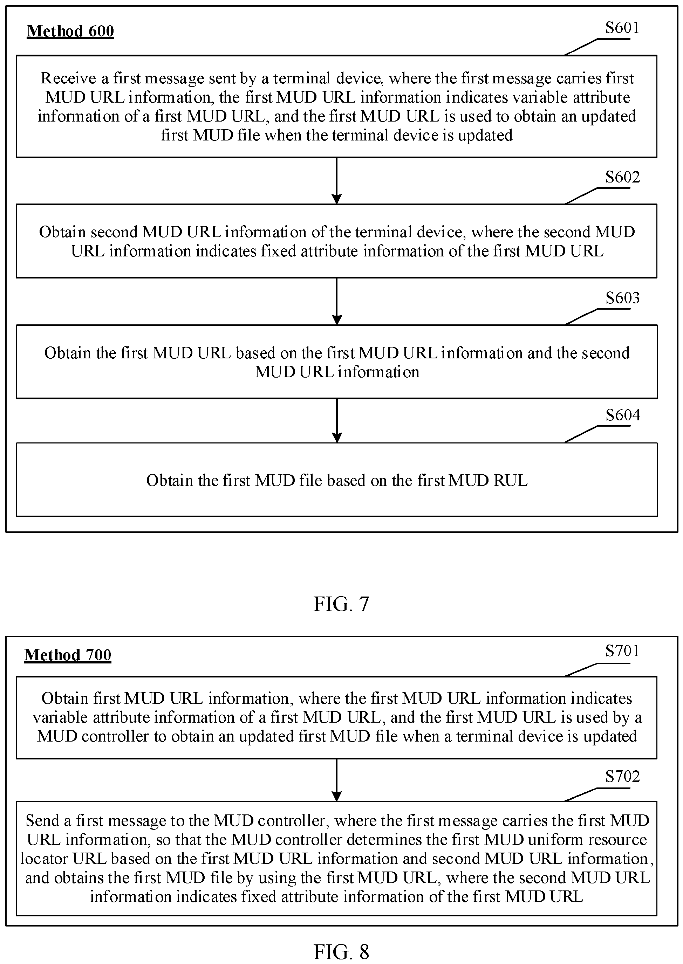

FIG. 7 is a schematic flowchart of a manufacturer usage description MUD obtaining method 600 according to an embodiment of this application. The method 600 is implemented by a MUD controller. For example, the MUD obtaining method 600 may include the following steps.

S601: A first message sent by a terminal device is received, where the first message carries first MUD URL information, the first MUD URL information indicates variable attribute information of a first MUD URL, and the first MUD URL is used to obtain an updated first MUD file when the terminal device is updated.

S602: Second MUD URL information of the terminal device is obtained, where the second MUD URL information indicates fixed attribute information of the first MUD URL

S603: The first MUD URL is obtained based on the first MUD URL information and the second MUD URL information.

S604: The first MUD file is obtained based on the first MUD URL

The MUD controller in the method 600 may be specifically the MUD controller 30 in the foregoing embodiments. For specific operations performed by the MUD controller, refer to the operations performed by the MUD controller 30 in the method 200 or the method 300. Corresponding to the method 200, in an example, related descriptions of S601 and S602 in the method 600 all correspond to S201, and related descriptions of S603 and S604 respectively correspond to S203 and S204. The first message may be the message 2 in the method 200. The first MUD URL information is the MUD URL information 1 in the method 200. The second MUD URL information is the MUD URL information 2 in the method 200. The first MUD file is the MUD file 0 in the method 200. In another example, related descriptions of S601 to S604 in the method 600 respectively correspond to S206 to S209. The first message may be the message 3 in the method 200. The first MUD URL information is the MUD URL information 3 in the method 200. The second MUD URL information is the MUD URL information 2 in the method 200. The first MUD file is the MUD file 1 in the method 200. Corresponding to the method 300, related descriptions of S601 to S604 in the method 600 respectively correspond to S306 to S309. The first message may be the message 4 in the method 300. The first MUD URL information is the MUD URL information 3 in the method 300. The second MUD URL information is the MUD URL information 2 in the method 300. The first MUD file is the MUD file 1 in the method 300.

In this embodiment of this application, the fixed attribute information indicates a same part of the first MUD URL and a second MUD URL. The fixed attribute information includes first fixed information of the terminal device and a composition rule of the first fixed information in a MUD URL. In an example, the fixed attribute information may be a part of the MUD URL, for example, a fixed URL prefix in the MUD URL: "https://www.huawei.com/mud/router/". In another example, the fixed attribute information may include fixed information of the terminal device and a composition rule of the fixed information in a MUD URL, for example, fixed information 1 (for example, a value huawei of a terminal device vendor field VENDOR and a value router of a device type field DEVICETYPE) and a composition rule (for example, https://www.VENDOR.com/mud/DEVICETYPE/) of the fixed information 1 in the MUD URL Therefore, based on the fixed information 1 and the composition rule of the fixed information 1 in the MUD URL, the fixed attribute information corresponding to the MUD URL may be determined to be "https://www.huawei.com/mud/router/".

The variable attribute information indicates a part that is of the first MUD URL and different from the second MUD URL. The variable attribute information includes second variable information of the terminal device and a composition rule of the second variable information in a MUD URL. In an example, the variable attribute information may be a part of the MUD URL, for example, a variable URL suffix in the MUD URL "firmware_version_1234/os_version_4321.json". In another example, the variable attribute information may include variable information 2 of the terminal device and a composition rule of the variable information 2 in a MUD URL, for example, the variable information 2 (for example, a value 1234 of a terminal device firmware version number field FIRMWARE and a value 4321 of a system version number field OS) and the composition rule (for example, FIRMWARE/OS.json) of the variable information 2. Therefore, based on the variable information 2 and the composition rule of the variable information 2 in the MUD URL, the variable attribute information may be determined to be "firmware_version_1234/os_version_4321.json".

In an example, the first message further carries a digital signature of the first MUD URL information. The method 600 may further include: The MUD controller verifies the first MUD URL information based on the digital signature. The digital signature is obtained by signing the first MUD URL information by using a private key of a manufacturer of the terminal device. In this case, that the MUD controller verifies the first MUD URL information based on the digital signature is specifically: verifying the digital signature based on a public key carried in a manufacturer certificate corresponding to the terminal device. In this way, by performing digital signature and verification on the first MUD URL information, it can be ensured that the variable attribute information used to obtain the first MUD file has a valid source and is not tampered with. Therefore, this ensures that the first MUD URL obtained based on the first MUD URL information is valid, and provides a data basis for securely obtaining the first MUD file.

In some possible implementations, obtaining the second MUD URL information of the terminal device in S602 may be specifically implemented in a plurality of manners. For example, when the first message includes the second MUD URL information, S602 may be specifically: obtaining the second MUD URL information from the first message. For another example, when the first message includes a certificate of the terminal device, S602 may be specifically: obtaining the certificate from the first message, and obtaining the second MUD URL information from the certificate. For still another example, when the first message includes a URL of a certificate of the terminal device, and the URL of the certificate indicates a location of the certificate in a network, the method 600 may further include: obtaining the URL of the certificate from the first message, and obtaining the certificate based on the URL of the certificate. In this case, S602 may be specifically: obtaining the second MUD URL information from the certificate. For another example, when the first message further includes a certificate (or a URL of the certificate) and the second MUD URL information, the method 600 may further include: verifying that the second MUD URL information carried in the first message is the same as the second MUD URL information carried in the certificate. It can be learnt that, the second MUD URL information is carried in the first message and verified, so that it can be ensured that the second MUD URL information used to obtain the first MUD URL can be verified. This ensures that the obtained first MUD URL is valid, and provides a data basis for securely obtaining the first MUD file.

In other possible implementations, before S601, the method 600 may further include: S6001: receiving a certificate sent by the terminal device; S6002: obtaining a second MUD URL based on the certificate, where the second MUD URL is a MUD URL configured when the terminal device is delivered from a factory; and S6003: obtaining a second MUD file based on the second MUD URL

In an example, the certificate includes the second MUD URL information. The second MUD URL information indicates fixed attribute information of the second MUD URL. The method 600 may further include: S6004: receiving third MUD URL information sent by the terminal device, where the third MUD URL information indicates variable attribute information of the second MUD URL. In this case, S6002 is specifically: S6002': obtaining the second MUD URL based on the third MUD URL information and the second MUD URL information carried in the certificate.

It should be noted that this example corresponds to the method 200. Specifically, both S6001 and S6004 correspond to S201 in the method 200, S6002' corresponds to S203 in the method 200, S6003 corresponds to S204 in the method 200, and S601 to S604 correspond to S206 to S209 in the method 200. The third MUD URL information is specifically the MUD URL information 1. The second MUD URL information corresponds to the MUD URL information 2. The first MUD URL information corresponds to the MUD URL information 3. The second MUD URL corresponds to the MUD URL 0. The second MUD file corresponds to the MUD file 0. The first MUD URL corresponds to the MUD URL 1. The first MUD file corresponds to the MUD file 1.

In another example, the certificate carries the complete second MUD URL. Obtaining the second MUD URL based on the certificate in S6002 is specifically: S6002": obtaining the second MUD URL from the certificate. In this example, the method 600 may further include: obtaining the second MUD URL information based on the second MUD file.

It should be noted that this example corresponds to the method 300. Specifically, S6001 corresponds to S302 in the method 300, S6002' corresponds to S303 in the method 300, S6003 corresponds to S304 in the method 300, and S601 to S604 correspond to S306 to S309 in the method 300. The second MUD URL corresponds to the MUD URL 0. The second MUD file corresponds to the MUD file 0. The first MUD URL corresponds to the MUD URL 1. The first MUD file corresponds to the MUD file 1.

In some possible implementations, obtaining the first MUD URL based on the first MUD URL information and the second MUD URL information in S603 may specifically include: obtaining, according to a preset rule, the first MUD URL based on the first MUD URL information and the second MUD URL information. The preset rule may specifically refer to a combination rule that is between fixed attribute information and variable attribute information and that is defined by a manufacturer based on a requirement and a feature of a MUD URL. The preset rule may be specifically a combination rule described by a text description, or may be a combination rule described by a formula, for example, a regular expression. Any rule that can clearly describe how to generate content of a corresponding complete MUD URL based on the fixed attribute information and the variable attribute information may be used as the preset rule.

For the preset rule, in one case, to improve security of obtaining a MUD file, the preset rule may be content written by a manufacturer into a certificate of a terminal device before the terminal device is delivered from a factory. In this case, the MUD controller may obtain the preset rule from the certificate. In another case, the preset rule may alternatively be written by a manufacturer into a terminal device independent of a certificate before the terminal device is delivered from a factory. In this case, the MUD controller may receive and store the preset rule sent by the terminal device. For security, the preset rule may alternatively carry a digital signature corresponding to the preset rule. In this way, the MUD controller may store the preset rule after the digital signature is verified. In still another case, the preset rule may alternatively be directly configured in the trusted MUD controller, by a manufacturer or a third-party trusted platform.

It should be noted that, according to the method 600 in this embodiment of this application, for a specific implementation and an achieved effect, refer to related descriptions in the embodiment shown in FIG. 3 or FIG. 4.

FIG. 8 is a schematic flowchart of a manufacturer usage description MUD obtaining method 700 according to an embodiment of this application. The method 700 is implemented by a terminal device. For example, the MUD obtaining method 700 may include the following steps.

S701: First MUD URL information is obtained, where the first MUD URL information indicates variable attribute information of a first MUD URL, and the first MUD URL is used by a MUD controller to obtain an updated first MUD file when the terminal device is updated.

S702: A first message is sent to the MUD controller, where the first message carries the first MUD URL information, so that the MUD controller determines the first MUD uniform resource locator URL based on the first MUD URL information and second MUD URL information, and obtains the first MUD file by using the first MUD URL. The second MUD URL information indicates fixed attribute information of the first MUD URL

The terminal device in the method 700 may be specifically the terminal device 11 in the foregoing embodiments. For specific operations performed by the terminal device, refer to the operations performed by the terminal device 11 in the method 200 or the method 300. Corresponding to the method 200, related descriptions of S701 and S702 in the method 700 respectively correspond to S205 and S206. The first message may be the message 3 in the method 200. The first MUD URL information is the MUD URL information 3 in the method 200. The second MUD URL information is the MUD URL information 2 in the method 200. The first MUD file is the MUD file 1 in the method 200. Corresponding to the method 300, related descriptions of S701 and S702 in the method 700 respectively correspond to S305 and S306. The first message may be the message 4 in the method 300. The first MUD URL information is the MUD URL information 3 in the method 300. The second MUD URL information is the MUD URL information 2 in the method 300. The first MUD file is the MUD file 1 in the method 300.

In this embodiment of this application, the fixed attribute information indicates a same part of the first MUD URL and a second MUD URL. The fixed attribute information includes first fixed information of the terminal device and a composition rule of the first fixed information in a MUD URL. The variable attribute information indicates a part that is of the first MUD URL and different from the second MUD URL. The variable attribute information includes second variable information of the terminal device and a composition rule of the second variable information in a MUD URL

In an example, the first message may further carry a digital signature of the first MUD URL information. The digital signature is obtained by performing digital signature by a manufacturer corresponding to the terminal device on the first MUD URL information by using a private key of the manufacturer, where a public key carried in a manufacturer certificate of the manufacturer and the private key of the manufacturer are paired, and the public key carried in the manufacturer certificate is used to verify the digital signature.

In some possible implementations, the first message may further directly carry the second MUD URL information. Alternatively, the first message may further carry a certificate of the terminal device, and the certificate carries the second MUD URL information. Alternatively, the first message may further carry a URL of a certificate of the terminal device, the URL of the certificate indicates a location of the certificate in a network, and the certificate carries the second MUD URL information. Alternatively, the first message further carries the certificate (or the URL of the certificate) and the second MUD URL information, and the second MUD URL information is used by the MUD controller to verify that the second MUD URL information in the first message is the same as the second MUD URL information carried in the certificate. It can be learnt that, the second MUD URL information is carried in the first message and verified by the MUD controller, so that it can be ensured that the second MUD URL information used to obtain the first MUD URL can be verified. This ensures that the obtained first MUD URL is valid, and provides a data basis for securely obtaining the first MUD file.

In other possible implementations, before S702, the method 700 may further include: sending a certificate to the MUD controller, so that the MUD controller obtains the second MUD URL based on the certificate and obtains a second MUD file based on the second MUD URL, where the second MUD URL is a MUD URL configured when the terminal device is delivered from a factory.

In an example, the certificate includes the second MUD URL information. The second MUD URL information indicates fixed attribute information of the second MUD URL. The method 700 may further include: sending third MUD URL information to the MUD controller, where the third MUD URL information and the second MUD URL information carried in the certificate are used by the MUD controller to obtain the second MUD URL. The third MUD URL information indicates variable attribute information of the second MUD URL. It should be noted that this example corresponds to the foregoing method 200.

In another example, the certificate carries the complete second MUD URL, and the certificate is used by the MUD controller to obtain the complete second MUD URL. The second MUD file carries the second MUD URL information. It should be noted that this example corresponds to the foregoing method 300.

In still other possible implementations, the first message further carries a preset rule, and the preset rule is used by the MUD controller to determine the first MUD URL. The preset rule may specifically refer to a combination rule that is between fixed attribute information and variable attribute information and that is defined by a manufacturer based on a requirement and a feature of a MUD URL. The preset rule may be specifically a combination rule described by a text description, or may be a combination rule described by a formula, for example, a regular expression. Any rule that can clearly describe how to generate content of a corresponding complete MUD URL based on the fixed attribute information and the variable attribute information may be used as the preset rule.

It should be noted that, according to the method 700 in this embodiment of this application, for a specific implementation and an achieved effect, refer to related descriptions in the embodiment shown in FIG. 3 or FIG. 4.

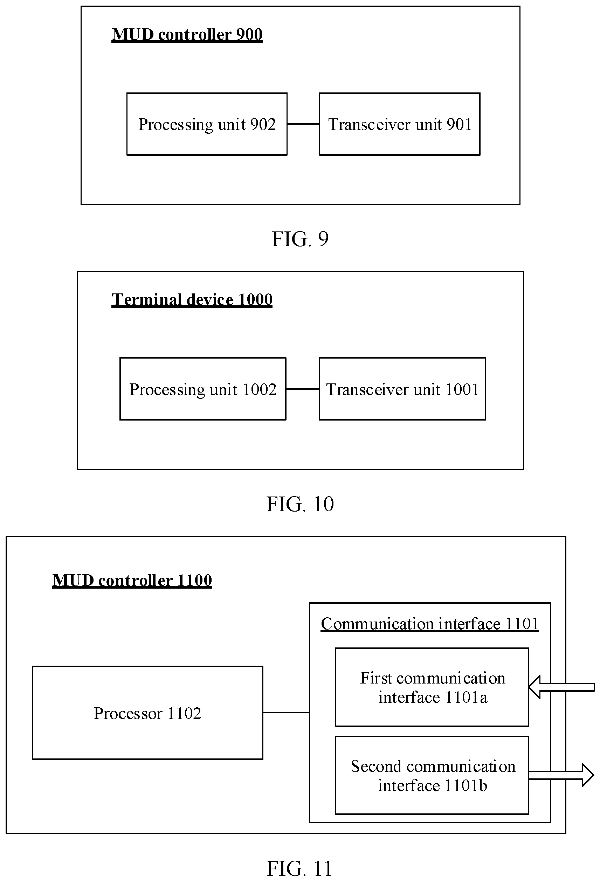

In addition, this application further provides a manufacturer usage description MUD controller 900, as shown in FIG. 9. The MUD controller 900 includes a transceiver unit 901 and a processing unit 902. The transceiver unit 901 is configured to perform a sending/receiving operation implemented by the MUD controller 30 in the method 100, the method 200, or the method 300, or the transceiver unit 901 is alternatively configured to perform a sending/receiving operation implemented by the MUD controller in the method 400 or the method 600. The processing unit 902 is configured to perform an operation other than the sending/receiving operation and implemented by the MUD controller 30 in the method 100, the method 200, or the method 300, or the processing unit 902 is alternatively configured to perform an operation other than the sending/receiving operation and implemented by the MUD controller in the method 400 or the method 600. For example, when the MUD controller 900 executes the method implemented by the MUD controller 30 in the method 100, the transceiver unit 901 may be configured to receive a message 1 sent by a terminal device 11, where the message 1 carries a MUD URL 2. The processing unit 902 may be configured to obtain a MUD file 2 based on the MUD URL 2.

In addition, this application further provides a terminal device 1000, as shown in FIG. 10. The terminal device 1000 includes a transceiver unit 1001 and a processing unit 1002. The transceiver unit 1001 is configured to perform a sending/receiving operation implemented by the terminal device 11 in the method 100, the method 200, or the method 300, or the transceiver unit 1001 is alternatively configured to perform a sending/receiving operation implemented by the terminal device in the method 500 or the method 700. The processing unit 1002 is configured to perform an operation other than the sending/receiving operation and implemented by the terminal device 11 in the method 100, the method 200, or the method 300, or the processing unit 1002 is alternatively configured to perform an operation other than the sending/receiving operation and implemented by the terminal device in the method 500 or the method 700. For example, when the terminal device 1000 executes the method implemented by the terminal device 11 in the method 100, the transceiver unit 1001 may be configured to send a message 1 to a MUD controller 30, where the message 1 carries a MUD URL 2. The processing unit 1002 may be configured to obtain the MUD URL 2, where the MUD URL 2 is used to obtain an updated MUD file 2 when the terminal device is updated.

In addition, an embodiment of this application further provides a manufacturer usage description MUD controller 1100, as shown in FIG. 11. The MUD controller 1100 includes a communication interface 1101 and a processor 1102. The communication interface 1101 includes a first communication interface 1101a and a second communication interface 1101b. The first communication interface 1101a is configured to perform a receiving operation performed by the MUD controller 30 in the embodiment shown in the method 100, the method 200, or the method 300, or the first communication interface 1101a is alternatively configured to perform a receiving operation performed by the MUD controller in the embodiment shown in the method 400 or the method 600. The second communication interface 1101b is configured to perform a sending operation performed by the MUD controller 30 in the embodiment shown in the method 100, the method 200, or the method 300, or the second communication interface 1101b is alternatively configured to perform a sending operation performed by the MUD controller in the embodiment shown in the method 400 or the method 600. The processor 1102 is configured to perform an operation other than the receiving operation and the sending operation and performed by the MUD controller 30 in the embodiment shown in the method 100, the method 200, or the method 300, or the processor 1102 is alternatively configured to perform an operation other than the receiving operation and the sending operation and performed by the MUD controller in the embodiment shown in the method 400 or the method 600. For example, the processor 1102 may perform an operation in the embodiment of the method 100: obtaining a MUD file 2 based on a MUD URL 2.

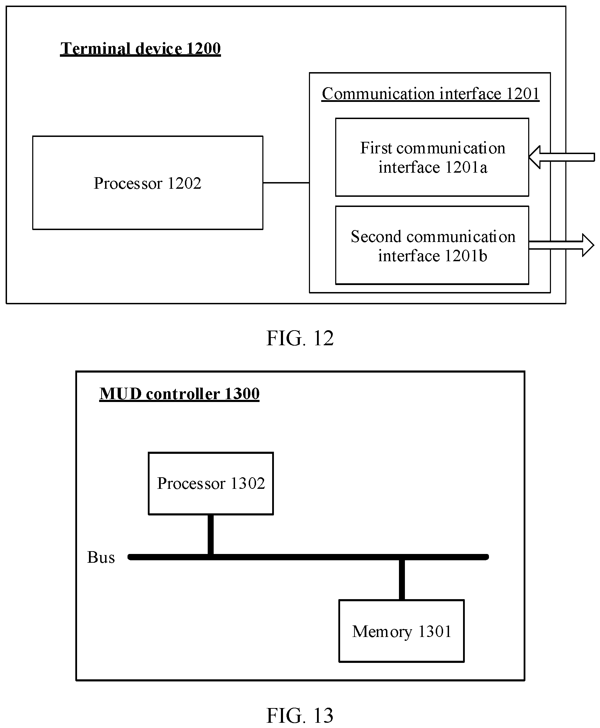

In addition, an embodiment of this application further provides a terminal device 1200, as shown in FIG. 12. The terminal device 1200 includes a communication interface 1201 and a processor 1202. The communication interface 1201 includes a first communication interface 1201a and a second communication interface 1201b. The first communication interface 1201a is configured to perform a receiving operation performed by the terminal device 11 in the embodiment shown in the method 100, the method 200, or the method 300, or the first communication interface 1201a is alternatively configured to perform a receiving operation performed by the terminal device in the embodiment shown in the method 500 or the method 700. The second communication interface 1201b is configured to perform a sending operation performed by the terminal device 11 in the embodiment shown in the method 100, the method 200, or the method 300, or the second communication interface 1201b is alternatively configured to perform a sending operation performed by the terminal device in the embodiment shown in the method 500 or the method 700. The processor 1202 is configured to perform an operation other than the receiving operation and the sending operation and performed by the terminal device 11 in the embodiment shown in the method 100, the method 200, or the method 300, or the processor 1202 is alternatively configured to perform an operation other than the receiving operation and the sending operation and performed by the terminal device in the embodiment shown in the method 500 or the method 700. For example, the processor 1202 may perform an operation in the embodiment of the method 100: storing a certificate and obtaining a MUD URL 2.

In addition, an embodiment of this application further provides a manufacturer usage description MUD controller 1300, as shown in FIG. 13. The MUD controller 1300 includes a memory 1301 and a processor 1302 that communicates with the memory 1301. The memory 1301 includes computer-readable instructions. The processor 1302 is configured to execute the computer-readable instructions, so that the MUD controller 1300 performs the method performed on the MUD controller 30 side in the method 100, the method 200, or the method 300, and the method performed on the MUD controller side in the method 400 and the method 600.

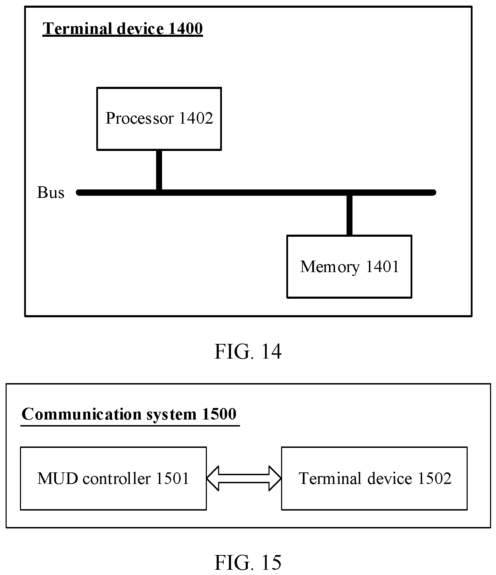

In addition, an embodiment of this application further provides a terminal device 1400, as shown in FIG. 14. The terminal device 1400 includes a memory 1401 and a processor 1402 that communicates with the memory 1401. The memory 1401 includes computer-readable instructions. The processor 1402 is configured to execute the computer-readable instructions, so that the terminal device 1400 performs the method performed on the terminal device 11 side in the method 100, the method 200, or the method 300, and the method performed on the terminal device side in the method 500 and the method 700.

It may be understood that, in the foregoing embodiment, the processor may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field programmable gate array (English: field-programmable gate array, FPGA for short), generic array logic (English: generic array logic, GAL for short), or any combination thereof. The processor may be one processor, or may include a plurality of processors. The memory may include a volatile memory (English: volatile memory), for example, a random-access memory (English: random-access memory, RAM for short); the memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory may further include a combination of the foregoing memories. The memory may be one memory, or may include a plurality of memories. In a specific implementation, the memory stores computer-readable instructions, and the computer-readable instructions include a plurality of software modules, for example, a sending module, a processing module, and a receiving module. After executing each software module, the processor may perform a corresponding operation based on an indication of each software module. In this embodiment, an operation performed by a software module is actually an operation performed by the processor based on an indication of the software module. After executing the computer-readable instructions in the memory, the processor may perform, based on indications of the computer-readable instructions, all operations that may be performed by a MUD file obtaining device.

It may be understood that, in the foregoing embodiment, the communication interface 1101 of the MUD controller 1100 may be specifically used as the transceiver unit 901 in the MUD controller 900, to implement data communication between a MUD controller and another device (for example, a terminal device). Similarly, the communication interface 1201 of the terminal device 1200 may be specifically used as the transceiver unit 1001 in the terminal device 1000, to implement data communication between a terminal device and another device (for example, a MUD controller).

In addition, an embodiment of this application further provides a communication system 1500, as shown in FIG. 15. The communication system 1500 includes a MUD controller 1501 and a terminal device 1502. The MDU controller 1501 may be specifically the MDU controller 900, the MDU controller 1100, or the MDU controller 1300. The terminal device 1502 may be specifically the terminal device 1000, the terminal device 1200, or the terminal device 1400. Alternatively, the MDU controller 1501 may be the MDU controller 30 in the network shown in FIG. 1, and the terminal device 1502 may be any one of the terminal device 11, the terminal device 12, ..., and the terminal device IN in the network shown in FIG. 1.

In addition, an embodiment of this application further provides a computer-readable storage medium. The computer-readable storage medium stores instructions. When the instructions are run on a computer, the computer performs the MUD file obtaining method in the embodiment shown in the foregoing method 100, method 200, method 300, method 400, method 500, method 600, or method 700.

In addition, an embodiment of this application further provides a computer program product, including a computer program or computer-readable instructions. When the computer program or the computer-readable instructions is/are run on a computer, the computer is enabled to perform the MUD file obtaining method in the embodiment shown in the foregoing method 100, method 200, method 300, method 400, method 500, method 600, or method 700.

From the foregoing descriptions of the implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device such as a router) to perform the methods described in embodiments or some parts of embodiments of this application.

Embodiments in this specification are all described in a progressive manner, for same or similar parts in embodiments, refer to these embodiments, and each embodiment focuses on a difference from other embodiments. Especially, device and system embodiments are basically similar to a method embodiment, and therefore are described briefly; for related parts, refer to partial descriptions in the method embodiment. The described device and system embodiments are merely examples. The modules described as separate parts may or may not be physically separate, and parts displayed as modules may or may not be physical modules, may be located in one position, or may be distributed on a plurality of network units. Some or all the modules may be selected according to actual needs to achieve the objectives of the solutions of embodiments. A person of ordinary skill in the art may understand and implement embodiments of the present invention without creative efforts.

The foregoing descriptions are merely example implementations of this application, but are not intended to limit the protection scope of this application. It should be noted that a person of ordinary skill in the art may make some improvements and polishing without departing from this application and the improvements and polishing shall fall within the protection scope of this application.

## Claims

1. A manufacturer usage description MUD file obtaining method, implemented by a MUD controller, wherein the method comprises:
verifying validity of a first MUD uniform resource locator URL based on a certificate sent by a terminal device;
obtaining a first MUD file based on the verified first MUD URL;
receiving a first message sent by the terminal device, wherein the first message carries a second MUD URL, the second MUD URL is used to obtain an updated second MUD file when the terminal device is updated, and the first MUD URL and the second MUD URL meet a matching rule; and
obtaining the second MUD file based on the second MUD URL

2. The method according to claim 1, wherein the first message further carries a digital signature of the second MUD URL, and the method further comprises:
verifying the second MUD URL based on the digital signature.

3. The method according to claim 2, wherein the verifying the second MUD URL based on the digital signature comprises:
verifying the digital signature based on a public key carried in a manufacturer certificate corresponding to the terminal device.

4. The method according to any one of claims 1 to 3, wherein the first message further carries the first MUD URL, and the method further comprises:
obtaining the first MUD URL from the first message; and
verifying that the second MUD URL and the first MUD URL meet the matching rule.

5. The method according to any one of claims 1 to 3, wherein the first message further carries the certificate, the certificate carries the first MUD URL, and the method further comprises:
obtaining the certificate from the first message; and
verifying that the second MUD URL and the first MUD URL carried in the certificate meet the matching rule.

6. The method according to any one of claims 1 to 3, wherein the first message further carries a URL of the certificate, the URL of the certificate indicates a location of the certificate in a network, and the method further comprises:
obtaining the URL of the certificate from the first message;
obtaining the certificate based on the URL of the certificate; and
verifying that the second MUD URL and the first MUD URL carried in the certificate meet the matching rule.

7. The method according to claim 5 or 6, wherein the first message further carries the first MUD URL, and the method further comprises:
verifying that the first MUD URL carried in the first message is the same as the first MUD URL carried in the certificate.

8. The method according to any one of claims 1 to 7, wherein the method further comprises:
obtaining the matching rule from the certificate;
or
obtaining the matching rule from the first MUD file.

9. The method according to any one of claims 1 to 8, wherein the matching rule comprises any one of the following: a URL prefix matching rule, a URL suffix matching rule, a URL key information matching rule, or a URL pattern matching rule.

10. A manufacturer usage description MUD file obtaining method, implemented by a MUD controller, and comprising:
receiving a first message sent by a terminal device, wherein the first message carries first MUD URL information, the first MUD URL information indicates variable attribute information of a first MUD URL, and the first MUD URL is used to obtain an updated first MUD file when the terminal device is updated;
obtaining second MUD URL information of the terminal device, wherein the second MUD URL information indicates fixed attribute information of the first MUD URL;
obtaining the first MUD URL based on the first MUD URL information and the second MUD URL information; and
obtaining the first MUD file based on the first MUD URL

11. The method according to claim 10, wherein the first message further carries a digital signature of the first MUD URL information, and the method further comprises:
verifying the first MUD URL information based on the digital signature.

12. The method according to claim 11, wherein the digital signature is obtained by signing the first MUD URL information by using a private key of a manufacturer corresponding to the terminal device; and
the verifying the first MUD URL information based on the digital signature comprises:
verifying the digital signature based on a public key carried in a manufacturer certificate corresponding to the terminal device.

13. The method according to any one of claims 10 to 12, wherein the first message comprises the second MUD URL information, and the obtaining second MUD URL information of the terminal device is specifically:
obtaining the second MUD URL information from the first message.

14. The method according to any one of claims 10 to 12, wherein the first message comprises the certificate of the terminal device, and the obtaining second MUD URL information of the terminal device comprises:
obtaining the certificate from the first message; and
obtaining the second MUD URL information from the certificate.

15. The method according to any one of claims 10 to 12, wherein the first message comprises a URL of the certificate of the terminal device, the URL of the certificate indicates a location of the certificate in a network, and the obtaining second MUD URL information of the terminal device comprises:
obtaining the URL of the certificate from the first message;
obtaining the certificate based on the URL of the certificate; and
obtaining the second MUD URL information from the certificate.

16. The method according to claim 14 or 15, wherein the first message further comprises the second MUD URL information, and the method further comprises:
verifying that the second MUD URL information carried in the first message is the same as the second MUD URL information carried in the certificate.

17. The method according to any one of claims 10 to 16, wherein before the receiving a first message sent by a terminal device, the method further comprises:
receiving a certificate sent by the terminal device;
obtaining a second MUD URL based on the certificate, wherein the second MUD URL is a MUD URL configured when the terminal device is delivered from a factory; and
obtaining a second MUD file based on the second MUD URL

18. The method according to claim 17, wherein the certificate comprises the second MUD URL information, and the second MUD URL information indicates fixed attribute information of the second MUD URL;
the method further comprises:
receiving third MUD URL information sent by the terminal device, wherein the third MUD URL information indicates variable attribute information of the second MUD URL; and
the obtaining a second MUD URL based on the certificate comprises:
obtaining the second MUD URL based on the third MUD URL information and the second MUD URL information carried in the certificate.

19. The method according to claim 17, wherein the certificate carries the complete second MUD URL, and the obtaining a second MUD URL based on the certificate comprises:
obtaining the second MUD URL from the certificate.

20. The method according to claim 19, wherein the method further comprises:
obtaining the second MUD URL information based on the second MUD file.

21. The method according to any one of claims 10 to 20, wherein the obtaining the first MUD URL based on the first MUD URL information and the second MUD URL information comprises:
obtaining, according to a preset rule, the first MUD URL based on the first MUD URL information and the second MUD URL information.

22. The method according to claim 21, wherein the preset rule comprises a combination rule described by a text description or a combination rule described by a regular expression.

23. The method according to claim 21 or 22, wherein the method further comprises:
obtaining the preset rule from the first message.

24. The method according to any one of claims 10 to 23, wherein the fixed attribute information indicates a same part of the first MUD URL and the second MUD URL, and the fixed attribute information comprises first fixed information of the terminal device and a composition rule of the first fixed information in a MUD URL

25. The method according to any one of claims 10 to 24, wherein the variable attribute information indicates a part that is of the first MUD URL and different from the second MUD URL, and the variable attribute information comprises second variable information of the terminal device and a composition rule of the second variable information in a MUD URL

26. A manufacturer usage description MUD file obtaining method, implemented by a terminal device, wherein the method comprises:
sending a certificate to a MUD controller, wherein the certificate is used by the MUD controller to verify validity of a first MUD uniform resource locator URL, and obtaining a first MUD file based on the verified first MUD URL;
obtaining a second MUD URL when the terminal device is updated, wherein the second MUD URL is used by the MUD controller to obtain an updated second MUD file, and the first MUD URL and the second MUD URL meet a matching rule; and
sending a first message to the MUD controller, wherein the first message carries the second MUD URL

27. The method according to claim 26, wherein
the first message further carries a digital signature of the second MUD URL

28. The method according to claim 27, wherein
the digital signature is obtained by performing digital signature by a manufacturer corresponding to the terminal device on the second MUD URL by using a private key of the manufacturer, wherein a public key carried in a manufacturer certificate of the manufacturer and the private key of the manufacturer are paired, and the public key carried in the manufacturer certificate is used to verify the digital signature.

29. The method according to any one of claims 26 to 28, wherein the method further comprises:
verifying that the second MUD URL and the first MUD URL meet the matching rule.

30. The method according to any one of claims 26 to 29, wherein the first message further carries the first MUD URL, and the first MUD URL is used by the MUD controller to verify that the first MUD URL and the second MUD URL meet the matching rule.

31. The method according to any one of claims 26 to 29, wherein the first message further carries the certificate, the certificate carries the first MUD URL, and the first MUD URL in the certificate is used by the MUD controller to verify that the first MUD URL and the second MUD URL meet the matching rule.

32. The method according to any one of claims 26 to 29, wherein the first message further carries a URL of the certificate, the URL of the certificate is used by the MUD controller to obtain the certificate, the certificate carries the first MUD URL, and the first MUD URL in the certificate is used by the MUD controller to verify that the first MUD URL and the second MUD URL meet the matching rule.

33. The method according to claim 31 or 32, wherein the first message further carries the first MUD URL, and the first MUD URL is used by the MUD controller to verify that the first MUD URL carried in the first message is the same as the first MUD URL carried in the certificate.

34. The method according to any one of claims 26 to 33, wherein the matching rule is carried in the certificate, or the matching rule is carried in the first MUD file.

35. The method according to any one of claims 26 to 34, wherein the matching rule comprises any one of the following: a URL prefix matching rule, a URL suffix matching rule, a URL key information matching rule, or a URL pattern matching rule.

36. A manufacturer usage description MUD file obtaining method, implemented by a terminal device, wherein the method comprises:
obtaining first MUD URL information, wherein the first MUD URL information indicates variable attribute information of a first MUD URL, and the first MUD URL is used by a MUD controller to obtain an updated first MUD file when the terminal device is updated; and
sending a first message to the MUD controller, wherein the first message carries the first MUD URL information, so that the MUD controller determines the first MUD uniform resource locator URL based on the first MUD URL information and second MUD URL information, and obtains the first MUD file by using the first MUD URL, wherein the second MUD URL information indicates fixed attribute information of the first MUD URL

37. The method according to claim 36, wherein the first message further carries a digital signature of the first MUD URL information.

38. The method according to claim 37, wherein the digital signature is obtained by performing digital signature by a manufacturer corresponding to the terminal device on the first MUD URL information by using a private key of the manufacturer, wherein a public key carried in a manufacturer certificate of the manufacturer and the private key of the manufacturer are paired, and the public key carried in the manufacturer certificate is used to verify the digital signature.

39. The method according to any one of claims 36 to 38, wherein the first message further carries the second MUD URL information.

40. The method according to any one of claims 36 to 38, wherein the first message further carries a certificate of the terminal device, and the certificate carries the second MUD URL information.

41. The method according to any one of claims 36 to 38, wherein the first message further carries a URL of a certificate of the terminal device, the URL of the certificate indicates a location of the certificate in a network, and the certificate carries the second MUD URL information.

42. The method according to claim 40 or 41, wherein the first message further carries the second MUD URL information, and the second MUD URL information is used by the MUD controller to verify that the second MUD URL information is the same as the second MUD URL information carried in the certificate.

43. The method according to any one of claims 36 to 42, wherein before the sending a first message to the MUD controller, the method further comprises:
sending a certificate to the MUD controller, so that the MUD controller obtains a second MUD URL based on the certificate and obtains a second MUD file based on the second MUD URL, wherein the second MUD URL is a MUD URL configured when the terminal device is delivered from a factory.

44. The method according to claim 43, wherein the certificate comprises the second MUD URL information, the second MUD URL information indicates fixed attribute information of the second MUD URL, and the method further comprises:
sending third MUD URL information to the MUD controller, wherein the third MUD URL information and the second MUD URL information carried in the certificate are used by the MUD controller to obtain the second MUD URL, and the third MUD URL information indicates variable attribute information of the second MUD URL

45. The method according to claim 43, wherein the certificate carries the complete second MUD URL, and the certificate is used by the MUD controller to obtain the complete second MUD URL

46. The method according to claim 45, wherein the second MUD file carries the second MUD URL information.

47. The method according to any one of claims 36 to 46, wherein the first message further carries a preset rule, and the preset rule is used by the MUD controller to determine the first MUD URL

48. The method according to any one of claims 36 to 47, wherein the fixed attribute information indicates a same part of the first MUD URL and the second MUD URL, and the fixed attribute information comprises first fixed information of the terminal device and a composition rule of the first fixed information in a MUD URL

49. The method according to any one of claims 36 to 48, wherein the variable attribute information indicates a part that is of the first MUD URL and different from the second MUD URL, and the variable attribute information comprises second variable information of the terminal device and a composition rule of the second variable information in a MUD URL

50. A manufacturer usage description MUD controller, comprising a transceiver unit and a processing unit, wherein
the processing unit is configured to verify validity of a first MUD uniform resource locator URL based on a certificate sent by a terminal device;
the processing unit is further configured to obtain a first MUD file based on the verified first MUD URL;
the transceiver unit is configured to receive a first message sent by the terminal device, wherein the first message carries a second MUD URL, the second MUD URL is used to obtain an updated second MUD file when the terminal device is updated, and the first MUD URL and the second MUD URL meet a matching rule; and
the processing unit is further configured to obtain the second MUD file based on the second MUD URL

51. The MUD controller according to claim 50, wherein the first message further carries a digital signature of the second MUD URL; and
the processing unit is further configured to verify the second MUD URL based on the digital signature.

52. The MUD controller according to claim 51, wherein the processing unit is specifically configured to:
verify the digital signature based on a public key carried in a manufacturer certificate corresponding to the terminal device.

53. The MUD controller according to any one of claims 50 to 52, wherein the first message further carries the first MUD URL;
the processing unit is further configured to obtain the first MUD URL from the first message; and
the processing unit is further configured to verify that the second MUD URL and the first MUD URL meet the matching rule.

54. The MUD controller according to any one of claims 50 to 52, wherein the first message further carries the certificate, and the certificate carries the first MUD URL;
the processing unit is further configured to obtain the certificate from the first message; and
the processing unit is further configured to verify that the second MUD URL and the first MUD URL carried in the certificate meet the matching rule.

55. The MUD controller according to any one of claims 50 to 52, wherein the first message further carries a URL of the certificate, and the URL of the certificate indicates a location of the certificate in a network;
the processing unit is further configured to obtain the URL of the certificate from the first message;
the processing unit is further configured to obtain the certificate based on the URL of the certificate; and
the processing unit is further configured to verify that the second MUD URL and the first MUD URL carried in the certificate meet the matching rule.

56. The MUD controller according to claim 54 or 55, wherein the first message further carries the first MUD URL; and
the processing unit is further configured to verify that the first MUD URL carried in the first message is the same as the first MUD URL carried in the certificate.

57. The MUD controller according to any one of claims 50 to 56, wherein
the processing unit is further configured to obtain the matching rule from the certificate;
or
the processing unit is further configured to obtain the matching rule from the first MUD file.

58. The MUD controller according to any one of claims 50 to 57, wherein the matching rule comprises any one of the following: a URL prefix matching rule, a URL suffix matching rule, a URL key information matching rule, or a URL pattern matching rule.

59. A manufacturer usage description MUD controller, comprising a transceiver unit and a processing unit, wherein
the transceiver unit is configured to receive a first message sent by a terminal device, wherein the first message carries first MUD URL information, the first MUD URL information indicates variable attribute information of a first MUD URL, and the first MUD URL is used to obtain an updated first MUD file when the terminal device is updated;
the processing unit is configured to obtain second MUD URL information of the terminal device, wherein the second MUD URL information indicates fixed attribute information of the first MUD URL;
the processing unit is further configured to obtain the first MUD URL based on the first MUD URL information and the second MUD URL information; and
the processing unit is further configured to obtain the first MUD file based on the first MUD URL

60. The MUD controller according to claim 59, wherein the first message further carries a digital signature of the first MUD URL information; and
the processing unit is further configured to verify the first MUD URL information based on the digital signature.

61. The MUD controller according to claim 60, wherein the digital signature is obtained by signing the first MUD URL information by using a private key of a manufacturer corresponding to the terminal device; and
the processing unit is specifically configured to:
verify the digital signature based on a public key carried in a manufacturer certificate corresponding to the terminal device.

62. The MUD controller according to any one of claims 59 to 61, wherein the first message comprises the second MUD URL information, and the processing unit is specifically configured to:
obtain the second MUD URL information from the first message.

63. The MUD controller according to any one of claims 59 to 61, wherein the first message comprises the certificate of the terminal device, and the processing unit is specifically configured to:
obtain the certificate from the first message; and
obtain the second MUD URL information from the certificate.

64. The MUD controller according to any one of claims 59 to 61, wherein the first message comprises a URL of the certificate of the terminal device, the URL of the certificate indicates a location of the certificate in a network, and the processing unit is specifically configured to:
obtain the URL of the certificate from the first message;
obtain the certificate based on the URL of the certificate; and
obtain the second MUD URL information from the certificate.

65. The MUD controller according to claim 63 or 64, wherein the first message further comprises the second MUD URL information; and
the processing unit is further configured to verify that the second MUD URL information carried in the first message is the same as the second MUD URL information carried in the certificate.

66. The MUD controller according to any one of claims 59 to 65, wherein
the transceiver unit is further configured to: before receiving the first message sent by the terminal device, receive a certificate sent by the terminal device;
the processing unit is further configured to obtain a second MUD URL based on the certificate, wherein the second MUD URL is a MUD URL configured when the terminal device is delivered from a factory; and
the processing unit is further configured to obtain a second MUD file based on the second MUD URL

67. The MUD controller according to claim 66, wherein the certificate comprises the second MUD URL information, and the second MUD URL information indicates fixed attribute information of the second MUD URL;
the transceiver unit is further configured to receive third MUD URL information sent by the terminal device, wherein the third MUD URL information indicates variable attribute information of the second MUD URL; and
the processing unit is specifically configured to:
obtain the second MUD URL based on the third MUD URL information and the second MUD URL information carried in the certificate.

68. The MUD controller according to claim 66, wherein the certificate carries the complete second MUD URL, and the processing unit is specifically configured to:
obtain the second MUD URL from the certificate.

69. The MUD controller according to claim 68, wherein
the processing unit is further configured to obtain the second MUD URL information based on the second MUD file.

70. The MUD controller according to any one of claims 59 to 69, wherein the processing unit is specifically configured to:
obtain, according to a preset rule, the first MUD URL based on the first MUD URL information and the second MUD URL information.

71. The MUD controller according to claim 70, wherein the preset rule comprises a combination rule described by a text description or a combination rule described by a regular expression.

72. The MUD controller according to claim 70 or 71, wherein
the processing unit is further configured to obtain the preset rule from the first message.

73. The MUD controller according to any one of claims 59 to 72, wherein the fixed attribute information indicates a same part of the first MUD URL and the second MUD URL, and the fixed attribute information comprises first fixed information of the terminal device and a composition rule of the first fixed information in a MUD URL

74. The MUD controller according to any one of claims 59 to 73, wherein the variable attribute information indicates a part that is of the first MUD URL and different from the second MUD URL, and the variable attribute information comprises second variable information of the terminal device and a composition rule of the second variable information in a MUD URL

75. A terminal device, comprising a transceiver unit and a processing unit, wherein
the transceiver unit is configured to send a certificate to a MUD controller, wherein the certificate is used by the MUD controller to verify validity of a first MUD uniform resource locator URL, and obtain a first MUD file based on the verified first MUD URL;
the processing unit is configured to obtain a second MUD URL when the terminal device is updated, wherein the second MUD URL is used by the MUD controller to obtain an updated second MUD file, and the first MUD URL and the second MUD URL meet a matching rule; and
the transceiver unit is further configured to send a first message to the MUD controller, wherein the first message carries the second MUD URL

76. The terminal device according to claim 75, wherein
the first message further carries a digital signature of the second MUD URL

77. The terminal device according to claim 76, wherein
the digital signature is obtained by performing digital signature by a manufacturer corresponding to the terminal device on the second MUD URL by using a private key of the manufacturer, wherein a public key carried in a manufacturer certificate of the manufacturer and the private key of the manufacturer are paired, and the public key carried in the manufacturer certificate is used to verify the digital signature.

78. The terminal device according to any one of claims 75 to 77, wherein
the processing unit is further configured to verify that the second MUD URL and the first MUD URL meet the matching rule.

79. The terminal device according to any one of claims 75 to 78, wherein the first message further carries the first MUD URL, and the first MUD URL is used by the MUD controller to verify that the first MUD URL and the second MUD URL meet the matching rule.

80. The terminal device according to any one of claims 75 to 78, wherein the first message further carries the certificate, the certificate carries the first MUD URL, and the first MUD URL in the certificate is used by the MUD controller to verify that the first MUD URL and the second MUD URL meet the matching rule.

81. The terminal device according to any one of claims 75 to 78, wherein the first message further carries a URL of the certificate, the URL of the certificate is used by the MUD controller to obtain the certificate, the certificate carries the first MUD URL, and the first MUD URL in the certificate is used by the MUD controller to verify that the first MUD URL and the second MUD URL meet the matching rule.

82. The terminal device according to claim 80 or 81, wherein the first message further carries the first MUD URL, and the first MUD URL is used by the MUD controller to verify that the first MUD URL carried in the first message is the same as the first MUD URL carried in the certificate.

83. The terminal device according to any one of claims 75 to 82, wherein the matching rule is carried in the certificate, or the matching rule is carried in the first MUD file.

84. The terminal device according to any one of claims 75 to 83, wherein the matching rule comprises any one of the following: a URL prefix matching rule, a URL suffix matching rule, a URL key information matching rule, or a URL pattern matching rule.

85. A terminal device, comprising a transceiver unit and a processing unit, wherein
the processing unit is configured to obtain first MUD URL information, wherein the first MUD URL information indicates variable attribute information of a first MUD URL, and the first MUD URL is used by a MUD controller to obtain an updated first MUD file when the terminal device is updated; and
the transceiver unit is configured to send a first message to the MUD controller, wherein the first message carries the first MUD URL information, so that the MUD controller determines the first MUD uniform resource locator URL based on the first MUD URL information and second MUD URL information, and obtains the first MUD file by using the first MUD URL, wherein the second MUD URL information indicates fixed attribute information of the first MUD URL

86. The terminal device according to claim 85, wherein the first message further carries a digital signature of the first MUD URL information.

87. The terminal device according to claim 86, wherein the digital signature is obtained by performing digital signature by a manufacturer corresponding to the terminal device on the first MUD URL information by using a private key of the manufacturer, wherein a public key carried in a manufacturer certificate of the manufacturer and the private key of the manufacturer are paired, and the public key carried in the manufacturer certificate is used to verify the digital signature.

88. The terminal device according to any one of claims 85 to 87, wherein the first message further carries the second MUD URL information.

89. The terminal device according to any one of claims 85 to 87, wherein the first message further carries a certificate of the terminal device, and the certificate carries the second MUD URL information.

90. The terminal device according to any one of claims 85 to 87, wherein the first message further carries a URL of a certificate of the terminal device, the URL of the certificate indicates a location of the certificate in a network, and the certificate carries the second MUD URL information.

91. The terminal device according to claim 89 or 90, wherein the first message further carries the second MUD URL information, and the second MUD URL information is used by the MUD controller to verify that the second MUD URL information is the same as the second MUD URL information carried in the certificate.

92. The terminal device according to any one of claims 85 to 91, wherein
the transceiver unit is further configured to: before sending the first message to the MUD controller, send a certificate to the MUD controller, so that the MUD controller obtains a second MUD URL based on the certificate and obtains a second MUD file based on the second MUD URL, wherein the second MUD URL is a MUD URL configured when the terminal device is delivered from a factory.

93. The terminal device according to claim 92, wherein the certificate comprises the second MUD URL information, and the second MUD URL information indicates fixed attribute information of the second MUD URL; and
the transceiver unit is further configured to send third MUD URL information to the MUD controller, wherein the third MUD URL information and the second MUD URL information carried in the certificate are used by the MUD controller to obtain the second MUD URL, and the third MUD URL information indicates variable attribute information of the second MUD URL

94. The terminal device according to claim 92, wherein the certificate carries the complete second MUD URL, and the certificate is used by the MUD controller to obtain the complete second MUD URL

95. The terminal device according to claim 94, wherein the second MUD file carries the second MUD URL information.

96. The terminal device according to any one of claims 85 to 95, wherein the first message further carries a preset rule, and the preset rule is used by the MUD controller to determine the first MUD URL

97. The terminal device according to any one of claims 85 to 96, wherein the fixed attribute information indicates a same part of the first MUD URL and the second MUD URL, and the fixed attribute information comprises first fixed information of the terminal device and a composition rule of the first fixed information in a MUD URL

98. The terminal device according to any one of claims 85 to 97, wherein the variable attribute information indicates a part that is of the first MUD URL and different from the second MUD URL, and the variable attribute information comprises second variable information of the terminal device and a composition rule of the second variable information in a MUD URL

99. A manufacturer usage description MUD controller, comprising:
a memory, wherein the memory comprises computer-readable instructions; and
a processor communicating with the memory, wherein the processor is configured to execute the computer-readable instructions, so that the MUD controller is configured to perform the method according to any one of claims 1 to 9 or the method according to any one of claims 10 to 25.

100. A terminal device, comprising:
a memory, wherein the memory comprises computer-readable instructions; and
a processor communicating with the memory, wherein the processor is configured to execute the computer-readable instructions, so that the terminal device is configured to perform the method according to any one of claims 26 to 35 or the method according to any one of claims 36 to 49.

101. A computer-readable storage medium, comprising computer-readable instructions, wherein when the computer-readable instructions are run on a computer, the computer is enabled to perform the method according to any one of claims 1 to 49.

102. A computer program product, comprising a computer program or computer-readable instructions, configured to implement the method according to any one of claims 1 to 49 when the computer program or the computer-readable instructions is/are run on a computer.

103. A communication system, comprising the MUD controller according to claim 99 and the terminal device according to claim 100; or comprising the MUD controller according to any one of claims 50 to 74 and the terminal device according to any one of claims 75 to 98.
